Europäisches Patentamt

**European Patent Office**

Office européen des brevets

(19)

(11) **EP 1 693 763 A1**

(12) **EUROPEAN PATENT APPLICATION**

(43) Date of publication:
**23.08.2006 Bulletin 2006/34**

(51) Int Cl.:
*G06F 17/00* (2006.01)

(21) Application number: **06101512.9**

(22) Date of filing: **10.02.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **18.02.2005 EP 05101221**

(71) Applicant: **International Business Machines Corporation
Armonk, 35 10504 (US)**

(72) Inventors:
 • **FRANZ, Joachim
  75382, Althengstett (DE)**

 • **GRUETZNER, Matthias
  71101, Schoenaich (DE)**
 • **SPRUTH, Wilhelm
  71034, Boeblingen (DE)**
 • **GERBER, Michael
  06794, Koeckern (DE)**

(74) Representative: **Klein, Hans-Jörg
  IBM Deutschland GmbH
  Patentwesen und Urheberrecht
  Pascalstrasse 100
  70569 Stuttgart (DE)**

(54) **System, method and computer program product for providing computing service-power to Service-Users via a heterogeneous distributed computing environment**

(57) The present invention discloses system and method for providing computing service-power to Service-User via a heterogeneous distributed computing environment, especially via a Grid-Computing-Environment using a new Grid Service-Broker, wherein the Grid Service-Broker is characterized by a Central Service-Broker part and a Distributed Service-Broker part both belonging to the Service-Provider Domain and being connected to each other via a communication infrastructure, wherein said Central Service-Broker part and said Distributed Service-Broker part providing a service-centric approach, wherein said service-centric approach provides service-power measured in Service-Units, wherein said Service-Units are defined and used by the Service-Broker in a way to be a resource independent and to be general transformable in a distributed heterogeneous environment, wherein said Central Service-Broker uses a Meta-Scheduling Service for distributing service-requests to the dedicated Distributed Service-Broker part managing a single processing domain which is based on projected Service-Units needed to process the incoming service-requests, wherein said Meta-Scheduling-Service receives collected information from the Distributed Service-Broker, said collected information comprises information about the projected Service-Units needed to process the incoming requests and remaining service-power capacity on each of the Service-Provider processing domains, wherein said distribution of said service-requests to the appropriate Distributed Service-Broker is performed by a Band Mapping component being part of said Central Service-Broker mapping incoming service-requests to a specific Band, each Band represents specific business products with a certain amount of Service-Power measured in Service-Units with an agreed Quality of Service, wherein each of said Band can be dynamically configured by a Band Transformer being part of the Distributed Service-Broker which sets the individual Band boundaries, wherein the conjunction of the availability of service-power measured in Service-Units and the Band mechanism allowing resource independent and transformable economic distribution of service requests within a heterogeneous distributed computing environment.

**Description**

**Field of Invention**

The present invention generally relates to a system, method and computer program product for providing computing service-power to Service-Users via a heterogeneous distributed computing environment, especially a Grid-Computing-Environment. In particular, the present invention relates to a new Grid Service-Broker infrastructure for managing computing service-power brokerage, service-request scheduling and profit optimization within a dynamic heterogeneous Grid-Computing-Environment.

**Background of Invention**

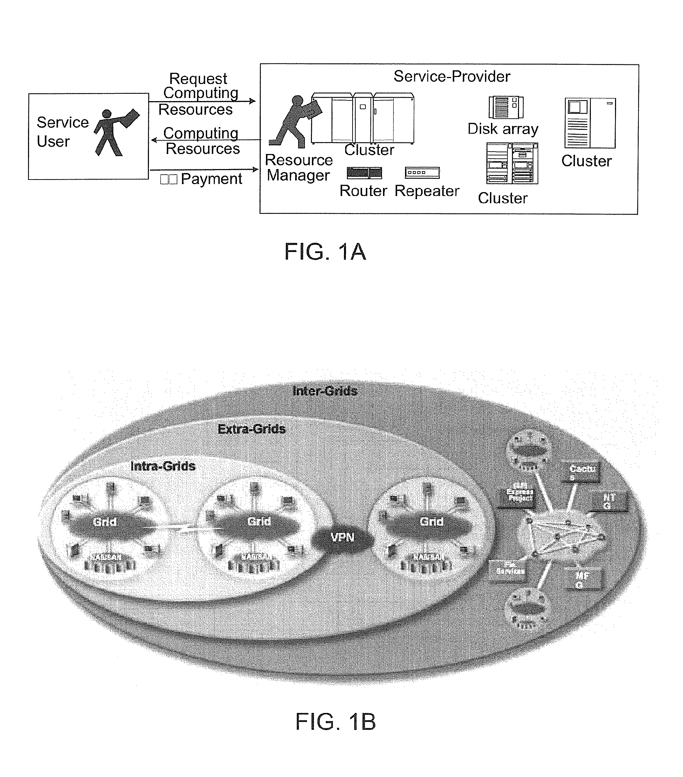

The traditional approach to get computing-service power is shown in the high level picture of Fig.1 A. It shows an Service-User requesting computing-Service-power from a Service-Provider. In the most cases the Service-User has a direct relationship with the Service-Provider (e.g. via contracts and Service Level Agreements for specific computing services). The Service-Provider manages his computing resources (e.g. processing, storage, network, etc.) on a resource level via Resource Management tools (Load Balancer, Resource Manager, etc.). These tools are optimized to allow for a high resource utilization and therefore to reach a higher profit. The Service-User pays for the computing service-power based on the resource usage and price structure contracted with the provider. The resource usage and pricing structure is more or less static in nature and covered by the Service Provider for peek-level demands (based on fixed contracts with the Service-User).

In a Grid-Computing-Environment (see Fig. 1B) the relationship between Service-User and Service-Provider changes due to the dynamic and heterogeneous nature of the environment. A direct relationship to a specific Grid Service-Provider will be not the standard case anymore.

The commercial excitement surrounding Grid computing has two commonly mentioned aspects, which are the efficient and flexible use of resources, covering cost reduction and opportunity.

The application areas as of today are primary those which require large-scale computation. There are examples in most industries, like risk analysis in finance, digital rendering in telecommunication & media, mechanical/electrical design, finite element analysis, failure analysis in Manufacturing, reservoir analysis in Energy, and so on. However besides this heavy computational space there is a severely emerging demand for grid techniques in the commercial IT-business.

All these applications have a demand on resources from the Grid. Fundamentally these resources are at the lowest level processors, storage, and bandwidth, all of which are phasing dynamic requests, which consequently lead to dynamic opportunity value or cost.

Additionally a Grid is in its most general form a large, shared, heterogeneous, resource pool that crosses intra- and/or inter-organizational boundaries (see Fig. 1B) and which is not limited to a peer-to-peer relationship.

The concept of coupling geographically distributed computing resources for solving large-scale computing problems is becoming increasingly popular, establishing what is today called Grid-Computing. The management of resources in the Grid-Environment becomes complex as they are (geographically) distributed, heterogeneous in nature, owned by different individuals/organizations each having their own resource management policies and different access-process-and-cost models. In addition a shift from the large-scale computational Grid-Users (requesting specific resources in a given amount of time) to more service-oriented Grid-Users (requesting Grid-Services) requires a new scheduling, reservation and processing approach for the Grid-Environment.

**PRIOR ART**

Most of the known solutions today which try to resolve the resource allocation and job scheduling problem are resource-centric. This means the scheduling and allocation process works on a low level for specific resources. These mechanisms are mainly implemented in Load Balancer and Resource Manager type of components as part of a homogeneous system environment with the main focus to share these resources to multiple Service-Users. There have been several approaches to include auction mechanisms to assist in the allocation of computing resources.

Most of the related work in Grid-Computing dedicated to resource management and scheduling problems adopt a conventional style where a scheduling component decides which jobs are to be executed at which site based on certain "cost functions". Such "cost functions" are often driven by resource-centric parameters that enhance system throughput and utilization rather than improving the profit for application processing. They treat resources as if they all cost the same price and the results of all applications have the same value even though this may not be the case in reality. The Service-User does not want to pay the highest price but wants to negotiate a particular price based on the demand, supply, market value, priority and available budget. Also, the results of different applications have different values at different times based on a different operational risk for the processing.

A Service-User is in competition with other Service-Users and a Service-Provider with other Service-Providers. A new research area called Grid-Economics discusses these aspects.

Besides pure technical methods for load balancing or job scheduling, as used today in homogenous computing environments, more sophisticated techniques are required. In fact the addressed problematic is investigated by the Grid-Economics, an emerging field of applied research and experimentation. It aims at providing economically sound business analysis and software products, which will help organizations to manage the monetization of shared IT-resources and services. This new field materializes existing knowledge and techniques from several fields like e-commerce (e-auctions, e-marketplaces), market design (common practices/recipes in established markets) stochastic optimization (portfolio theory, derivatives, real options), commodity markets (pricing and risk for electricity, oil, etc.), network/bandwidth pricing (network effects), market-based control (artificial economies).

Key for any acceptable solution is a business driven approach. Any approach need to answer the questions like: which service request gets what, when, how much, and what service guarantee? Followed by questions of value of pre-reserved Service slots in the future, including the question how will this value change as function of time. This states clearly that the lower level Grid-Products specified by CPU, Memory and Bandwidth are not sufficient.

Using standalone auction mechanisms to allocate computing resources (service) is not sufficient to solve the scheduling and reservation problems. Auctions can be used to guide in finding an actual market price. This is mandatory but not sufficient to optimize the profit for a Service-Provider.

Current implementations of Grid-Brokers used some type of auction mechanisms lead by the Service-User (jobs bidding for resources) to optimize the budget and the resource allocation. From a Service-Providers perspective a modified auction mechanism is necessary lead by the Service-Provider (resources bidding for jobs) to optimize their profit.

Rudimentary auction mechanisms in combination with economic optimization models aiming in an optimal allocation of computing resources have been explored mainly in the field of load balancing for homogenous systems. However this approach covered this space insufficiently.

Standard auction mechanisms are facing performance issues during the negotiation phase due to the large number of auction runs and re-tries necessary to handle individual jobs. This leads to a tremendous overhead in communication and bad response time.

**Object of the present invention**

It is object of the present invention to provide a system, method and computer program product for providing computing service-power to Service-User by using a heterogeneous computing environment avoiding the disadvantages of the prior art.

**Summary of the present invention**

The present invention provides a new approach on how Service-Requestors and Service-Providers can use computing resources. This includes new ways in the communication and in the allocation of computing resources within a distributed heterogeneous computing environment.

The traditional resource-centric approach on using computing resources has been extended to a level of a service-centric trading of computing service-power measured in Service-Units. These Service-Units has been defined in a way to be resource independent and to be general transformable in a distributed heterogeneous computing environment. The trading of service-power between Service-Requestors and Service-Providers is performed by a Service-Broker component.

This Service-Broker consists of a Central Service-Broker part and a Distributed Service-Broker part running within a Service-Provider-domain. A Service-Provider-domain itself can contain multiple processing-domains (heterogeneous computing systems e.g. Grids or Clusters). The Service-Provider-domain is managed by the Central Service-Broker part communicating to each of its Distributed Service-Broker parts which are running in the processing-domains. A novel Meta-Scheduling Service is used to distribute the service-requests to the processing-domains. The Distributed Service-Broker uses local Resource-Managers or Workload-Managers capabilities to dispatch the service-request for final processing and to fulfill the Service-Providers objectives.

In order to optimize the profit for the Service-Provider-domain a new method (Band Distribution Algorithm for Processing Domains - BDAfPD) is used by the Service-Broker to allow a multi-objective-optimization for the distribution (scheduling) of Service-Requests to processing-domains (Meta-Scheduling-Service). In addition the BDAfPD correlates service-requests to specific Business-Products and Business-Processes of the Service-Provider-domain in order to allow for a service-centric processing (Band Mapping Unit). A novel feature implemented by the Service-Broker is a method to dynamically adapt the service-power supply for processing-domains to the actual and future (expected) Demand. This is mainly handled by the dynamic Band Management component Band Transformer.

The Distributed Service-Broker part uses an advanced reservation-scheme to plan the traded service-power. The reservation-scheme allows for the planning of service-power-requests and service-power-reservation-requests. A basic Reservation Unit is represented by a reservation-slot which is a fixed or variable capacity of service-power in a single period of time. Using the advanced Reservation-scheme the Distributed Service-Broker is able to optimize the processing according to QoS-Parameter (e.g. Timeline, elapse-time, etc.), utilization and profit optimization targets by smoothing the peek-load demands over periods of time. This can be based on historical time series analysis (using Performance-Index data, profit data, etc.) collected by the data-collection-service over time and evaluated by the data historical simulation service.

The On-Demand-Value Calculation (ODVC) performed by the Distributed Service-Broker part is used to represent a processing domain specific market-value for service-requests. It allows for an optimized auction process in trading service-power which is needed by the processing of service-requests. The novel auction process which can be used by the Service-Broker is called "Capacity-Sealed-Bid Auction".

**Brief Description of the several views of the drawings**

The above, as well as additional objectives, features and advantages of the present invention will be apparent in the following detailed written description.

The novel features of the invention are set forth in the appended claims. The invention itself, however, as well as a preferred mode of use, further objectives, and advantages thereof, will be best understood by reference to the following detailed description of an illustrative embodiment when read in conjunction with the accompanying drawings, wherein:

Fig. 1 A shows the traditional prior art approach for providing computing service-power to Service-Users via a heterogeneous distributed computing environment,

Fig. 1 B shows a typical prior art Grid-Computing-Environment with heterogeneous resources spanning cross organizational boundaries,

Fig. 2 A shows a new approach for providing computing service-power to Service-Users via a Grid-Computing-Environment by using the inventive Grid Service-Broker infrastructure,

Fig. 2 B shows a generalized inventive approach by using Grid-Service-Brokers to trade computing Service Power from different Grid-Service Providers,

Fig. 2 C shows the inventive Grid Service-Broker infrastructure including Central Service-Broker part and the Distributed Grid Service-Broker part,

Fig. 2 D shows the Profiler component being part of the inventive Central Grid-Service Broker part,

Fig. 2 E shows Global Bulletin Board and Collection Service being part of the Central Grid Service-Broker part,

Fig. 2 F shows the On-Demand Information Service being part of the Central Grid Service-Broker part,

Fig. 2 G shows the Band Mapping Unit being part of the Central Grid Service-Broker part,

Fig. 2 H shows Distributor, Receiver, Mediator Service being part of the Central Grid-Service Broker part,

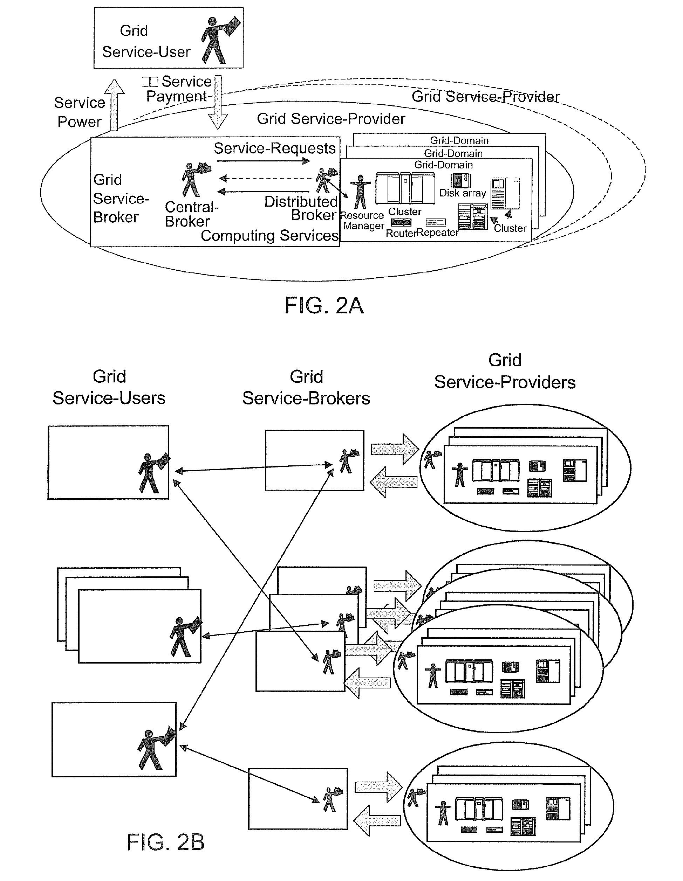

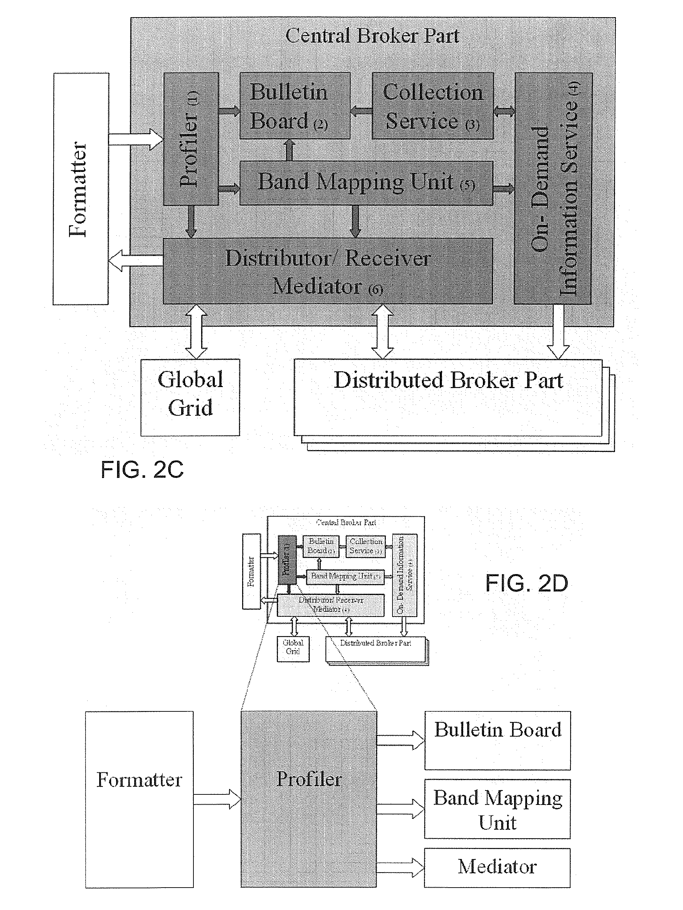

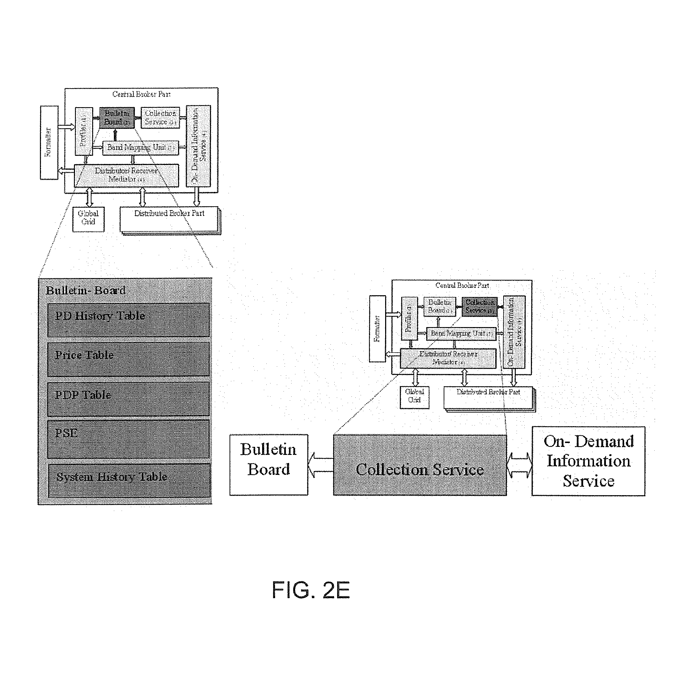

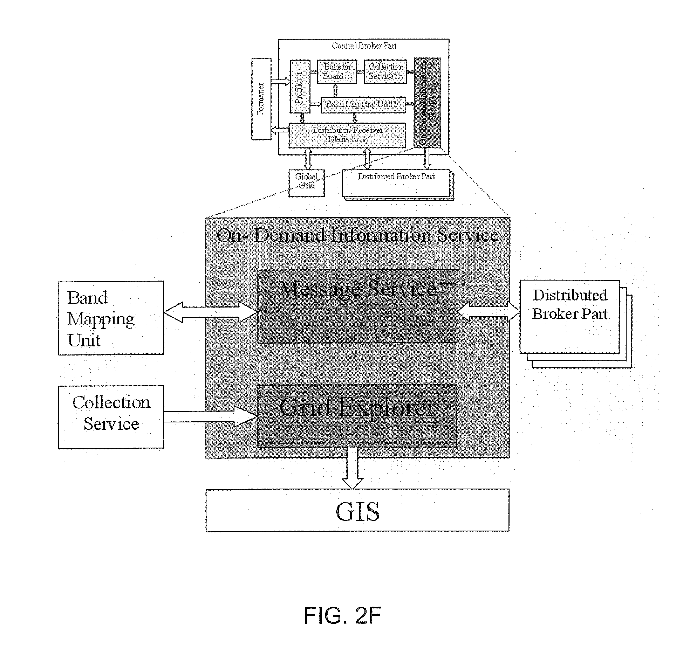

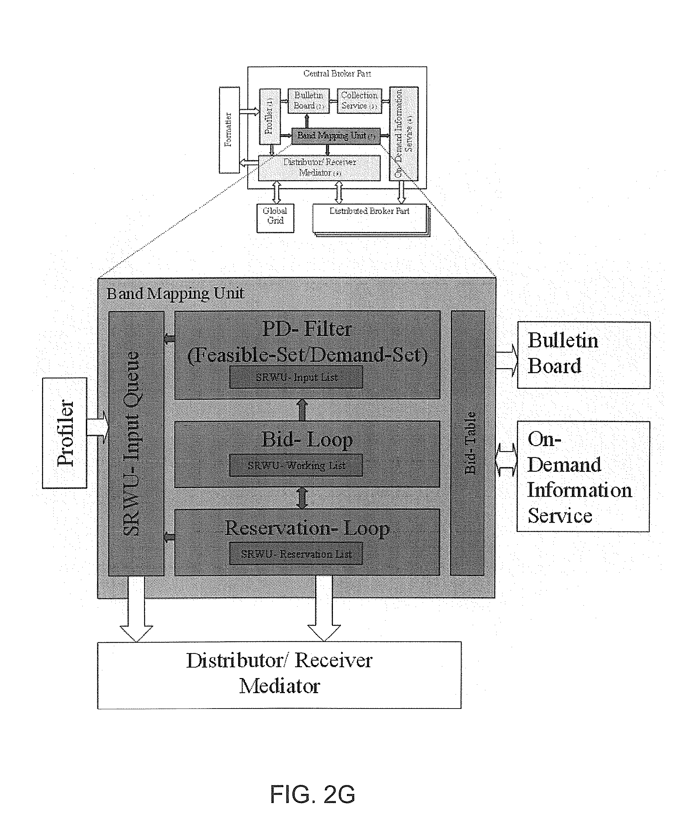

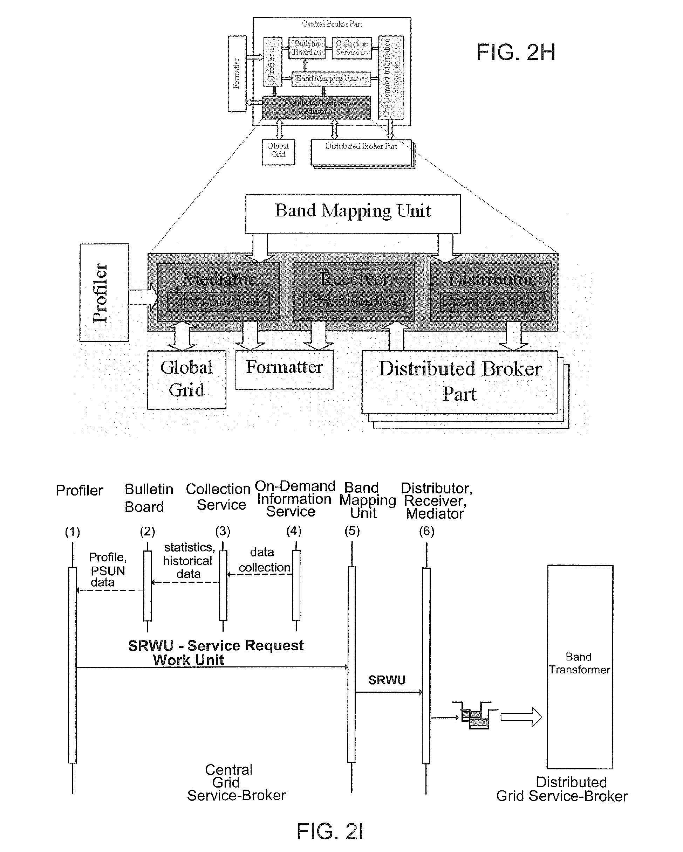

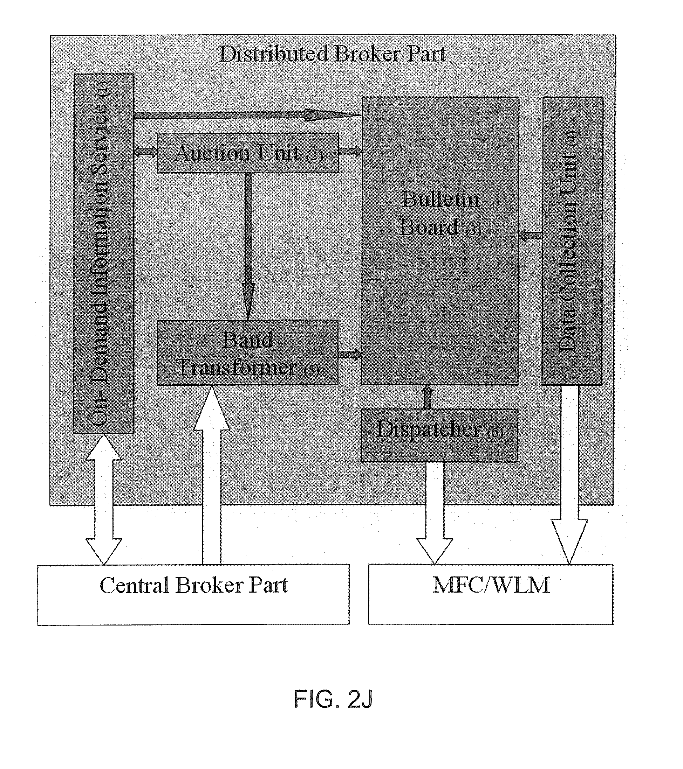

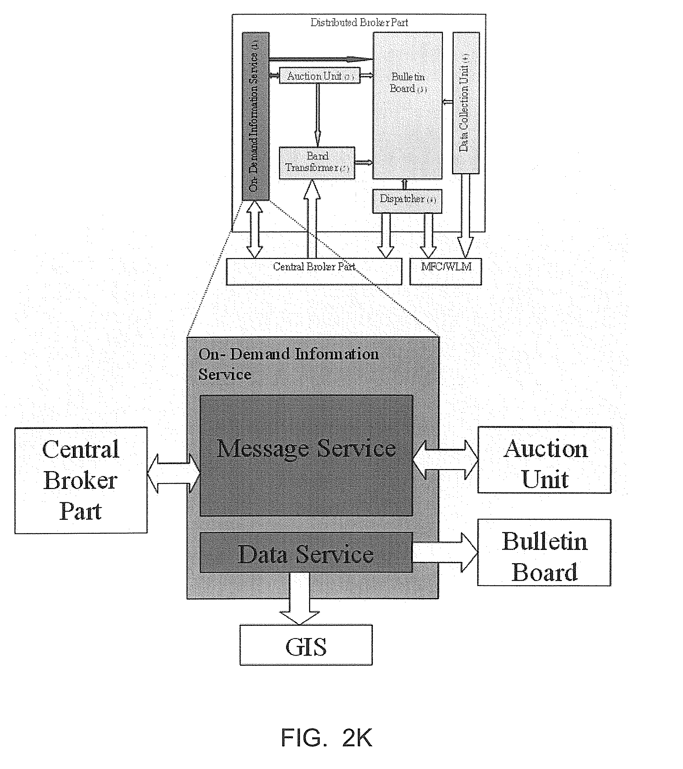

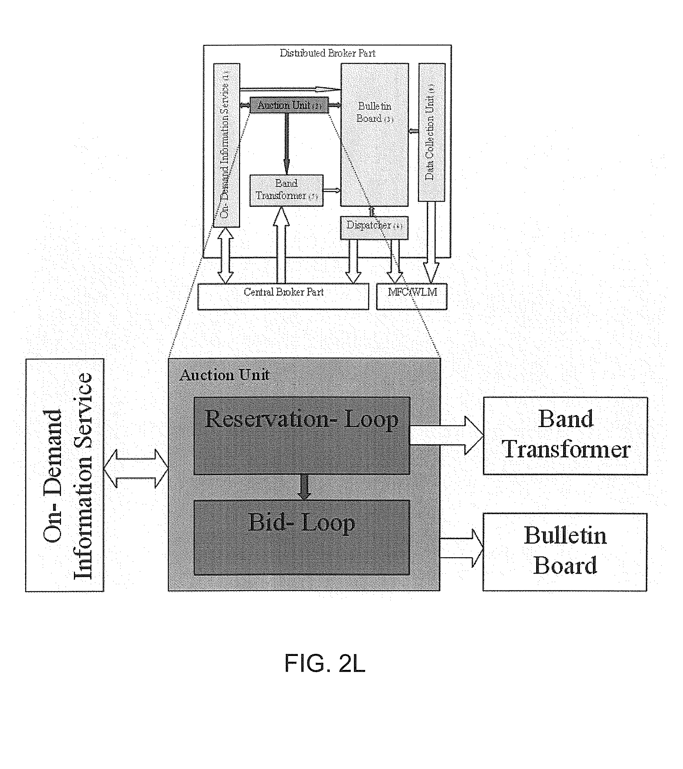

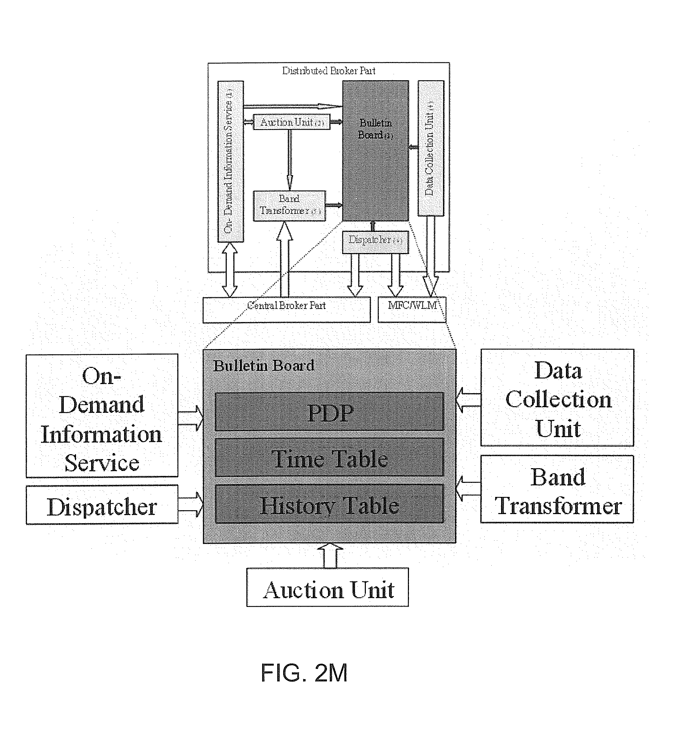

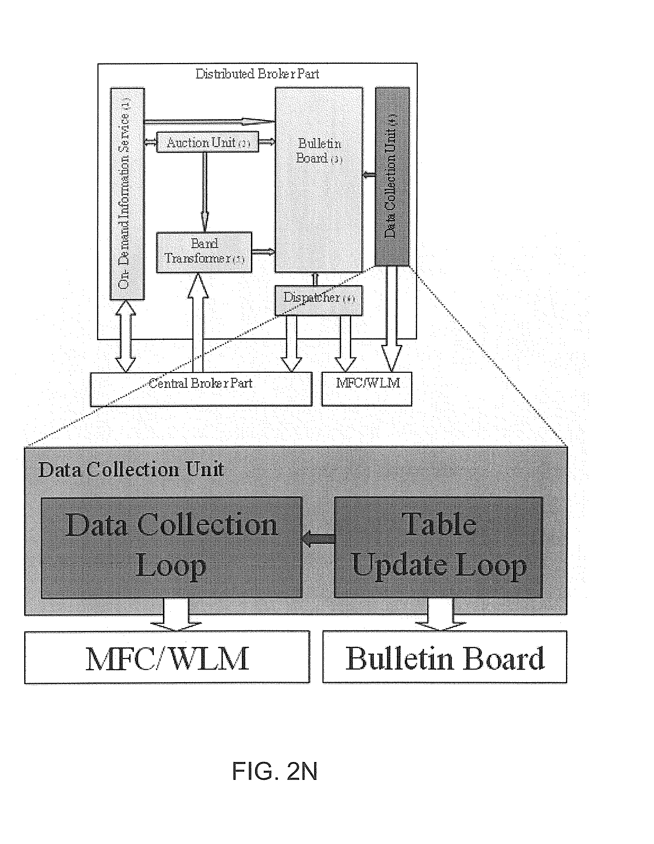

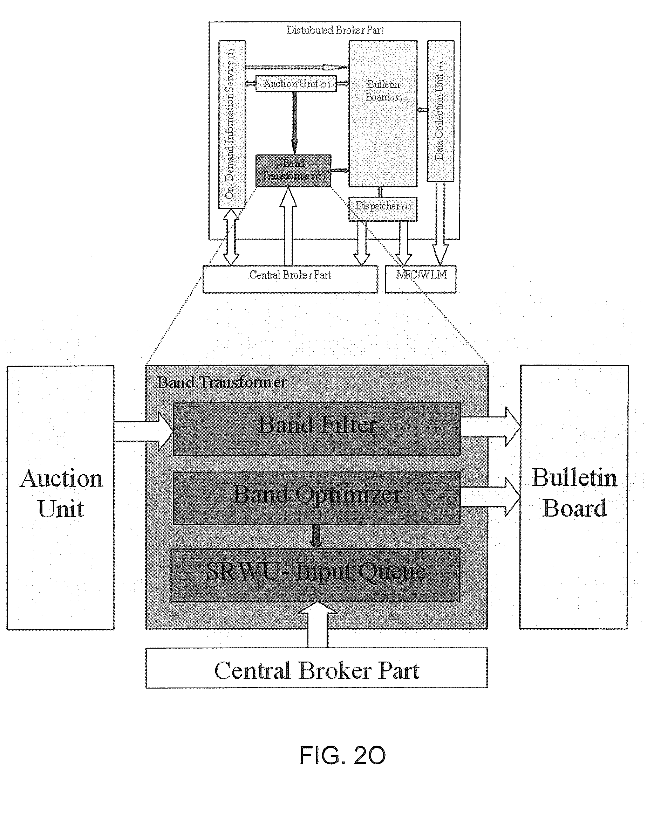

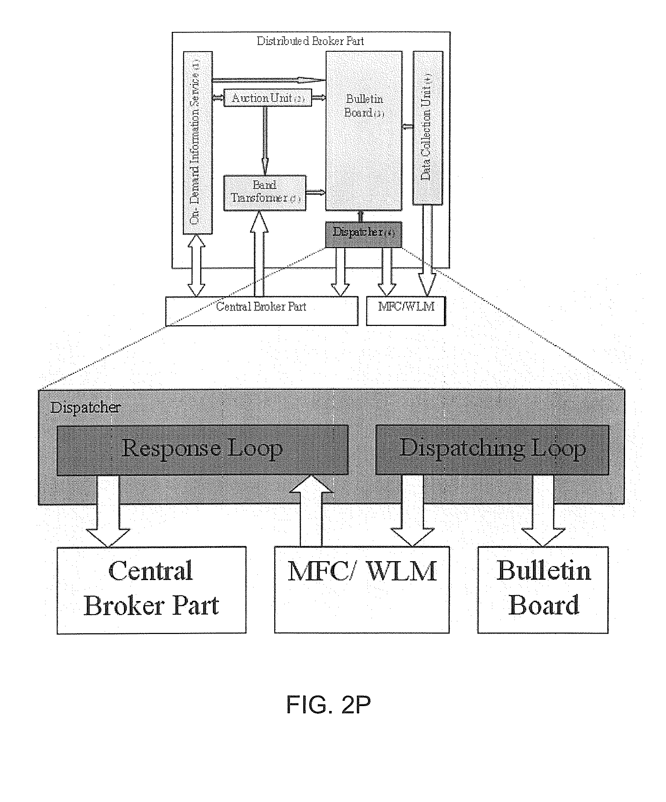

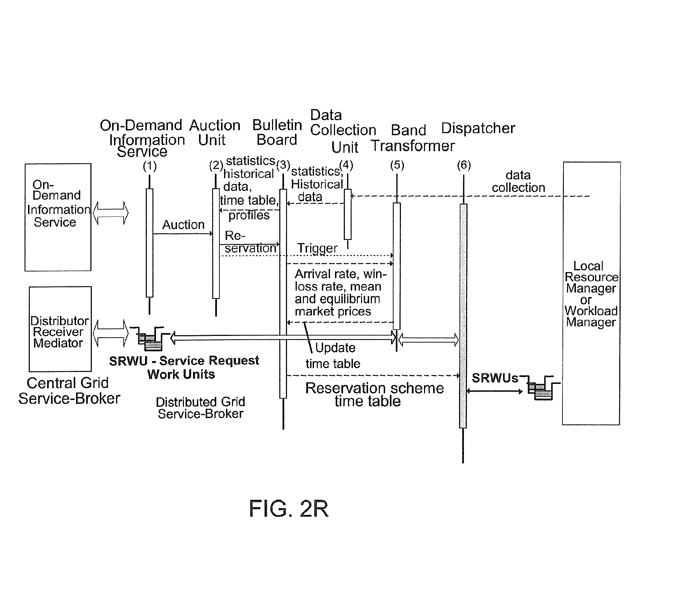

Fig. 2 I shows an interaction diagram of the components in the Central Grid Service-Broker part,

Fig. 2 J shows the infrastructure of the inventive Distributed Grid Service-Broker part,

Fig. 2 K shows the On-Demand Information Service being part of the Distributed Grid Service-Broker part,

Fig. 2 L shows the Auction Unit being part of the Distributed Grid Service-Broker part,

Fig. 2 M shows the Bulletin Board component being part of the Distributed Grid Service-Broker part,

Fig. 2 N shows the Data Collection Unit being part of the Distributed Grid Service-Broker part,

Fig. 2 O shows the Band Transformer component being part of the Distributed Grid Service-Broker,

Fig. 2 P shows the Dispatcher component being part of the Distributed Grid Service-Broker part,

Fig. 2 R shows the interaction diagram between the components of the Distributed Grid Server-Broker part,

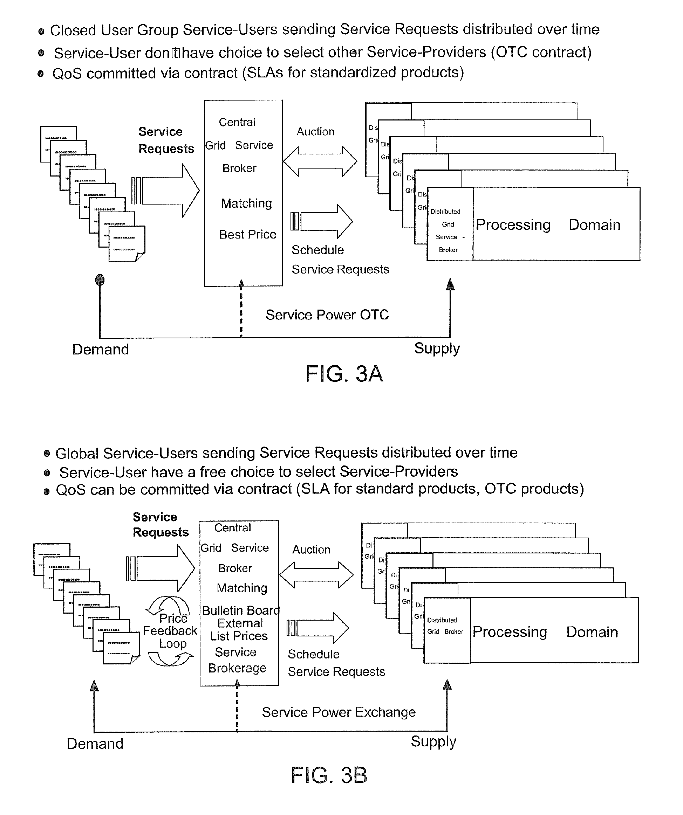

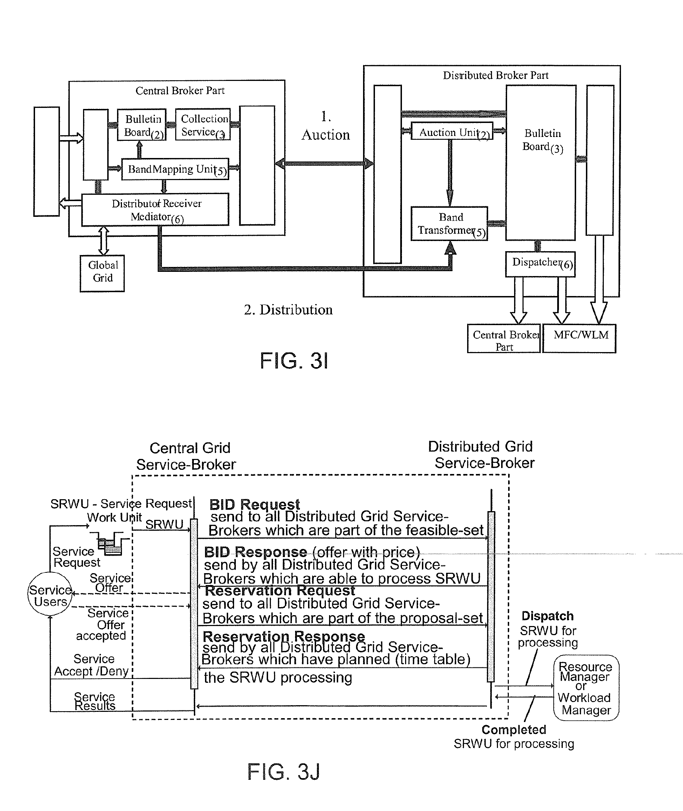

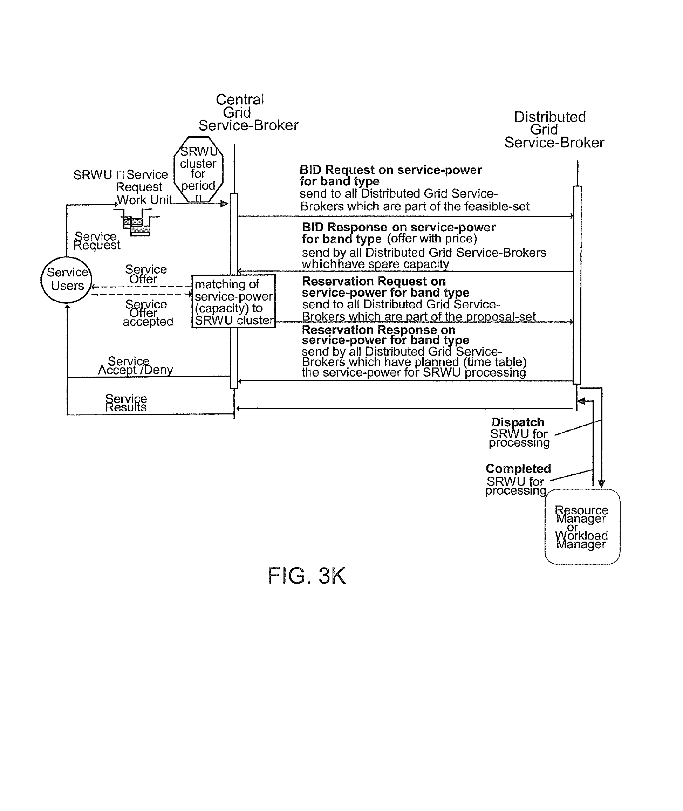

Fig. 3 A shows an embodiment of the inventive Grid Service-Broker in a Local Market,

Fig. 3 B shows an embodiment of the inventive Grid Service-Broker in a Global Market,

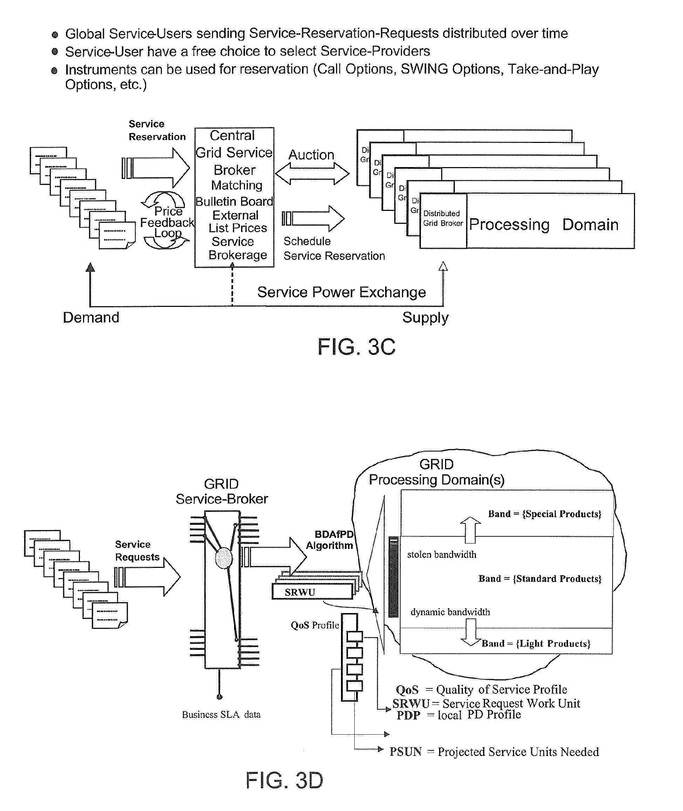

Fig. 3 C shows an embodiment of the reservation process performed by the inventive Grid Service-Broker,

Fig. 3 D shows an embodiment of the inventive Grid Service-Broker using a Meta Scheduler,

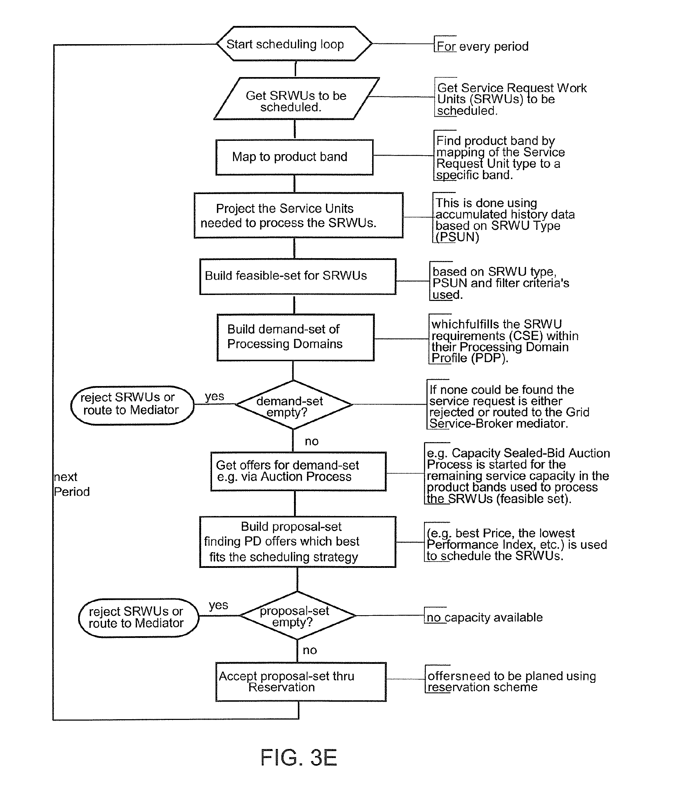

Fig. 3 E shows the basic flow of Fig. 3 D,

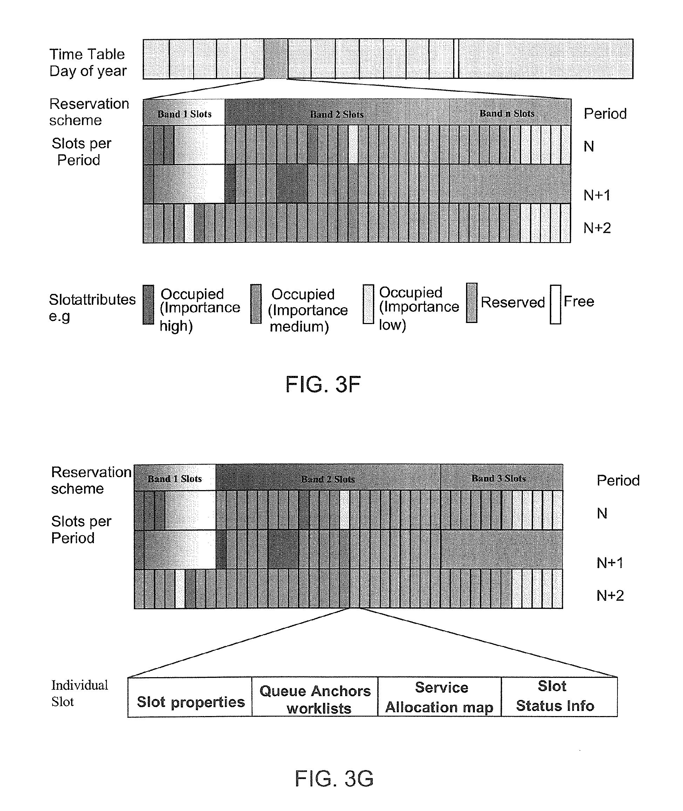

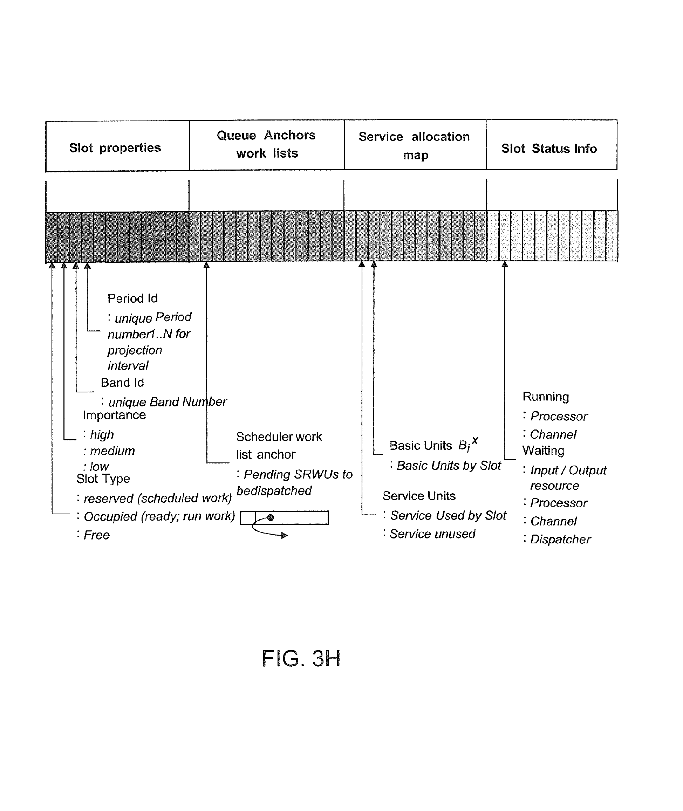

Fig. 3 F/G/H shows embodiments of a Reservation scheme of the inventive Grid Service-Broker,

Fig. 3 I shows the novel auction process between Central Grid Service-Broker part and Distributed Grid Service-Broker part of the present invention,

Fig. 3 J/K show a preferred embodiment of communication flow of the novel auction process as shown in Fig. 3 I, (Bemerk.: capacity sealed bid auction communication flow wird in 3K gezeigt!)

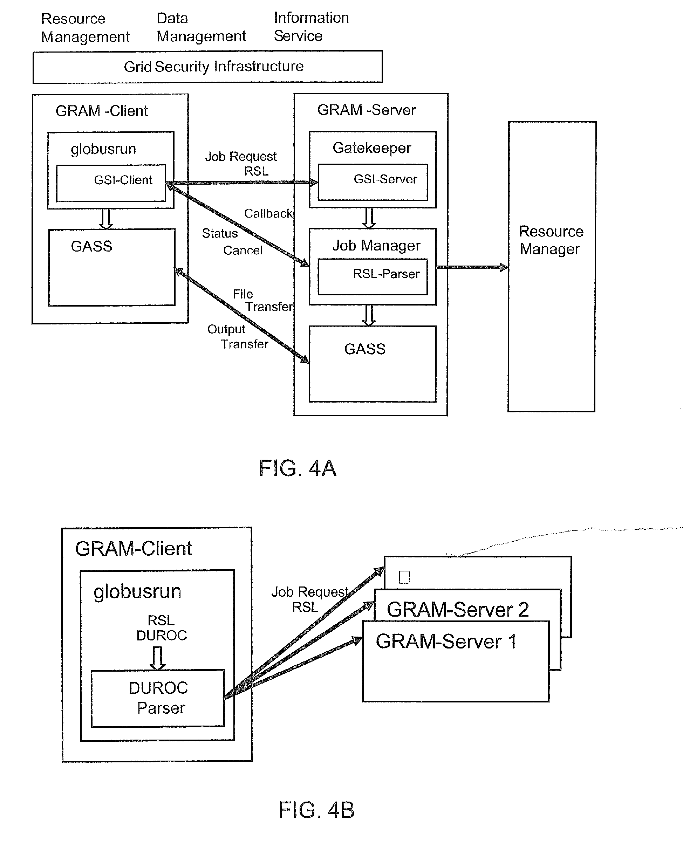

Fig. 4 A - C show the prior art Globus Grid architecture, and

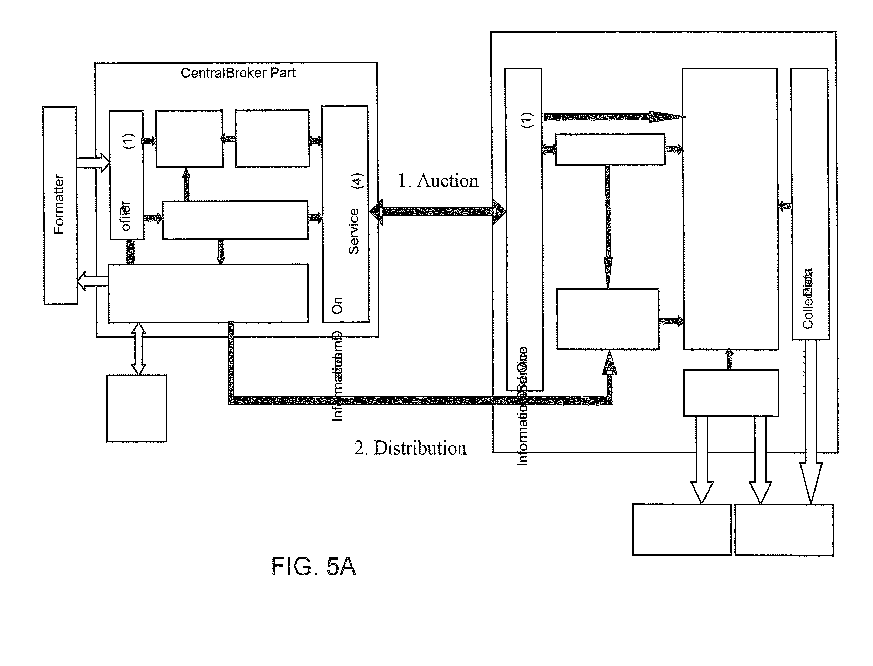

Fig. 5 A - G show an implementation of the inventive Grid Service-Broker in the prior art Globus-Grid architecture as shown in Fig. 4 A-C.

As set forth below in Fig. 2 A - R the basic components of the inventive Service-Broker are described in conjunction with a Grid-Environment. However the basic components of the present invention may also be used in any distributed heterogeneous or homogeneous computing environment requiring a service-broker for distributing service-requests to Service-Providers providing computing service-power.

The inventive new approach as shown in Fig. 2 A modifies the traditional approach by providing new components and a new communication structure for the Grid-Computing-Environment.

A major component newly introduced by the present invention is the Service-Broker called Grid Service-Broker in the Grid-Environment which implements mediator-type broking services for unique computing service-power between Grid Service-Users and Grid Service-Providers. The Grid Service-Broker abstracts computing resources to the level of computing service-power measured in Service-Units. It includes a Meta-Scheduler for Economic Optimization Model Level 3 (EOML3).

A Grid Service-User which could be a human End-User, automated process, application system, etc. needs computing service-power to process service-requests, e.g. business products. The demand for computing service-power is recognized by the Grid Service-Broker component which is part of a Grid Service-Providers environment. The Central-(Grid Service) Broker part of the Grid Service-Broker forms a unique service-request (based on the Grid Service-Users requirements) and negotiates this request using an Economic Optimization Model Level 3 with its Distributed-Broker counterparts running in each Grid-Processing Domain. The Distributed-Brokers connects to local Resource Managers to perform the final processing of service-requests. The Grid Service-User pays for the delivered service-power to the Grid Service-Broker.

The general usage of the inventive Grid Service-Broker approach is shown in Fig. 2 B. It shows different Grid Service-Users demanding Computing Service-Power from different Grid Service-Providers. This is done by the Grid Service-Brokers trading the computing service-power of each individual Service-Provider. The Service-Provider could run several Grid-Domains, which are covered by the Grid Service-Broker looking to the Grid Service-User as a single Service-Provider Domain. There is no more a direct computing resource usage by a Service-User due to the abstraction of the computing resources to the level of computing service-power performed by the Grid Service-Broker.

The following part of the patent description describes the software architecture of the inventive Grid Service-Broker. The Grid Service-Broker is structured into a Central Grid Service-Broker and a Distributed Grid Service-Broker major part, performing the main tasks described at the Fig. 2 C - 2 R. Now a more detailed structure of each component within the major parts of the Grid Service-Broker is described.

The Central Grid Service-Broker part is structured into the major components as shown in Fig. 2 C.

A Formatter component (which is not necessarily a part of the Grid Service-Broker) receives incoming service-requests from Service-Users. The pre-formatted service-request-work-unit (SRWU) is given to the Profiler (1) component of the Central Service-Broker (see Fig. 2 D).

The Profiler (see Fig. 2 D) checks the authorization and the requirements of service-requests demanding service-power (building profiles: CSE=Customer Service Elements, QoS=Quality of Service). It initializes the SRWU with information about QoS, PSUN (Projected Service Units Needed to process the SRWU) and Band type. This is done by using the Global Bulletin Board (2). The Bulletin Board provides storage structures to maintain Grid Service-Broker information (e.g. Profiles, history tables, statistical data (time series), etc.). See Fig. 2 E for an example. In case the Band Mapping (product mapping) fails, e.g. the SRWU type is not supported by the Service-Provider (e.g. appropriate business products are not provided) the Mediator component is invoked to handle / trade the SRWU outside the Service-Providers domain (e.g. Global Grid).

The Global Bulletin Board gets actual information by a component called Collection Service (3; see Fig. 2 E) which dynamically collects statistical data about the managed processing domains. It also allows the PDs to set and update their global information (e.g. prices). To get the required information the Collection Service uses low-level communication infra-structure services which is called On-Demand Information Service (4). This component explores the underlying infrastructure service, e.g. Globus GIS, Grid-Explorer or the Grid-Service Broker Message service to collect the data (see Fig. 2 F).

Having validated and profiled the SRWU a hand over of the request to the Band Mapping Unit (5; BMU) is performed by the Profiler component. Major tasks of the BMU (see Fig. 2 G) are: global (Service-Provider level) optimization of the Bands, Trading of SRWUs (service-power) and establishment of price, Explores micro economic mechanisms for trading (e.g. demand-set, feasible-set, auction process).

Leads auctions process (e.g. Capacity Sealed-Bid auction) to get offers for the PDs, Builds proposal-set and perform Reservation to finalize the trade.

The communication process needed for SRWU scheduling (to the Distributed Service-Broker, global Grid, Formatter, Profiler) is supported by the Distributor, Receiver, Mediator (6) service component which encapsulates the underlying infrastructure (see Fig. 2 H). Queuing mechanisms can be used to handle the communication between the components internally (e.g. SRWU Input/Output queue).

The flow between the components for the data collection, profiling, mapping and scheduling of SRWUs in the Central Grid Service-Broker part is described by interaction diagram Fig. 2I.

The Distributed Grid Service-Broker part with its major components is shown in Fig. 2 J.

The On-Demand Information Services (1) component of the Distributed Grid Service-Broker is the counterpart to the Central Grid Service-Broker component described by Fig. 2 F. It is responsible for the communication and the control process needed for auctions, data service and Central Grid-Service-Broker recommendations (e.g. Optimization for band settings; see Fig. 2 K).

Receiving a Bid-Request to participate in an auction process the Auction Unit (2) component is triggered by the On-Demand Information Service. It is responsible to handle an auction process (e.g. Capacity Sealed-Bid Auction) with the Central Grid Service-Broker part until the final reservation step. It uses plug-in type mechanism to perform the On-Demand-Value calculation and to support different auction types. Finally it invokes the planning for SRWU processing to keep the required QoS and to smooth workload using an advanced Reservation scheme (see Fig. 2 L).

The Distributed Grid Service-Broker part owns a local Bulletin Board (3) to maintain data utilized by different components. It contains profile, statistical and historical data of the processing domain managed by the Distributed Broker. The reservation Scheme data structures (time table) are also part of the local Bulletin Board (see Fig.2 M).

A Data Collection Unit (4) component is responsible to periodically provide and update statistical data to the Bulletin Board by interfacing to local Resource Managers or work load managers (see Fig. 2 N).

The Band Transformer (5) component performs the dynamic adaption of the individual Band to the demand (see Fig. 2 O). It gets recommendations from the Central Grid Service-Broker and is triggered by the Auction Unit. It utilizes information provided by the Bulletin Board (e.g. Arrival rate, win-loss rate, mean and equilibrium market prices, profit situation, etc.). The Band Transformer uses a plug-in type mechanism to allow for different kind of Filter algorithms (e.g. using static, dynamic filtering).

It is closely coupled with the auction unit component to allow for an immediate adaptation of the Bands to the current demand and provide a feedback loop for the supply of service-power.

To allow for an optimal processing of SRWUs by Resource Managers which are dedicated to individual Bands, the Band Transformer performs the setting of individual parameters required by local resource or work load managers (e.g. goal, class, priority, enclaves, velocity, etc.).

The Dispatcher (6) component of the Distributed Grid Service-Broker is responsible to dispatch SRWUs which are eligible for processing (status ready) as indicated by the reservation scheme time table. This is done within a periodic dispatch loop (see Fig. 2 P). The SRWUs are getting dispatched to local Resource or workload Manager exploring their local interface. A response loop receives results (responses, messages, etc.) from the processing of the SRWU, which are forwarded to the receiver component of Central Grid Service-Broker part.

The flow between the components for the data collection, auctioning, reservation and dispatching of SRWUs in the Distributed Grid Service-Broker part is shown in the interaction diagram Fig. 2 R.

A preferred embodiment of the inventive Grid Service-Broker in a local market environment is described now.

The local market scenario shows the application of the Grid Service-Broker for Service-Users having an individual contract (OTC = Over the counter) with the Grid Service-Provider. The Service-User does not have the free choice in the selection of other Service-Providers. The Quality of Service (SLA) could be used in the contract. Even this is not a closed feedback loop to the Service-User in sense of an economic market the Grid Service-Broker works as a EOML3 Scheduler.

The major process flow of the Central Service-Broker and Distributed Service-Broker components is shown in Fig. 3A.

The Central Grid Service-Broker component receives Service-Requests from Service-Users indicating the processing of computing services. These service-requests could span single application services, business process services and other types of computing services (including service-power-reservation) provided by the Grid Service-Provider. The Central Grid Service-Broker analyses the Service-Requests and maps them to a unique feasible-set for individual business product types (Bands). Based on the business product type an auction process is started periodically by the Central Grid Service-Broker to all Distributed Grid Service-Brokers counterparts belonging to a "demand-set" determined by the Central Grid Service-Broker. The Distributed Grid Service-Broker calculates its On-Demand-Value (ODV) for the processing of each business product type (band) and provides an offer containing the ODV-price to the Central-Broker component. If there is no service-power available based on the actual reservation-scheme no offer will be provided.

The Central Grid Service-Broker evaluates the offers and builds a "proposal-set" using its Utility function (e.g. Best Price). Reservation-requests are sent to all the Distributed Grid Service-Brokers which are members of the "proposal-set". The scheduling of the chosen service-requests is done within the reservation process loop. Dispatching is performed by the Distributed Grid Service-Broker using the reservation-schemes time table.

The Central Grid Service-Broker performs the following major tasks:

monitors profit of Distributed-Grid-Processing-Domains (Balanced Score Card),

recommendations for the increase/decrease of service-power,

filtering of service-requests not matching,

schedule service-request for Processing,

EOML3 Central Part (demand-set, feasible-set, utility-function, global optimization, etc.)

All these tasks have the objectives to reach global (overall) Profit Optimization.

The Distributed Grid Service-Broker performs the following major tasks:

dynamic adaptation of Bands to the demand (e.g. Arrival Rate, Auction win/loss, Market trends, Global Strategy),

calculate on-demand-value using Service-Providers product strategy and pricing models for service-request,

Reservation scheme,

Dispatching of service-requests to the Resource Manager, and

EOML3 Distributed Part (supply, pricing function, local optimization, etc.).

All these tasks have the objective to reach local Profit Optimization

A further preferred embodiment of the inventive Grid Service-Broker in a Global Market environment is described in conjunction with Fig. 3 B now.

The global market scenario shows the application of the Grid Service-Broker for global Service-Users having either individual contracts (OTC = Over the counter) or using standardized business products from the Grid Service-Provider. The Service-Users have the free choice in the selection of any Service-Provider which seems to fulfill their needs. Quality of Service (SLA) could be used in the contracts. This scenario is a typical global Grid Scenario as shown in Fig. 2 B. It represents a closed feedback loop between the Service-Users (demand) and the Service-Providers (supply) in sense of an economic market. The Grid Service-Broker works as a EOML3 Scheduler with a full Service-Brokerage functionality. A Bulletin board which can be accessed (queried) by a Service-User is supported to announce the actual listed prices.

The major process of the Central Service-Broker component is shown in Fig. 3 B.

The Central Grid Service-Broker component receives service-requests from global Service-Users indicating the demand of computing services. These service-requests could span single application services, business process services and other types of computing services (including service-power-reservation instruments like Forwards, Call Options, Swings, Take-and-Pay etc.) provided by the Grid Service-Provider. An external Bulletin Board allows Service-Users to query on the actual market prices for the different computing services provided by the Service-Provider. The Central Grid Service-Broker analyses the service-requests and maps them to a unique feasible-set for individual business product types (Bands). Based on the business product type an auction process is started periodically by the Central Grid Service-Broker to all Distributed Grid Service-Brokers counterparts belonging to a "demand-set" determined by the Central Grid Service-Broker. The Distributed Grid Service-Broker calculates its On-Demand-Value (ODV) for the processing of each business product type (band) and provides an offer containing the ODV-price to the Central Service-Broker component. If there is no service-power available based on the actual reservation-scheme no offer will be provided. The Central Grid Service-Broker evaluates the offers and builds a reservation-set using its Utility function (e.g. Best Price, supply-demand Matching function). Reservation-requests are sent to all the Distributed Grid Service-Brokers which are members of the reservation-set. Scheduling of the service-requests will be done together with the reservation-requests. Dispatching is performed by the Distributed Grid Service-Broker using the reservation scheme.

The Central Grid Service-Broker performs the following major tasks:

monitors profit of Distributed Grid Processing Domains (Balanced Score Card),

monitors Capacity (demand and supply),

calculates and announce actual market prices (average and equilibrium),

recommendation reports for Distributed Grid Processing Domains (e.g. to increase/decrease of service-power capacity),

support of instruments for service-brokerage,

filtering of service-requests not matching,

scheduling of service-request for processing, and

EOML3 Central Part (demand-set, feasible-set, utility-function, global optimization, etc.).

The Distributed Grid Service-Broker performs the following major tasks:

dynamic adoption of Bands to the demand (e.g. Arrival Rate, Auction win/loss, Market trends, Global Strategy),

calculate on-demand-value using Service-Providers product strategy and pricing models for service-request,

Reservation scheme,

dispatching of service-requests to the Resource Manager,

EOML3 Distributed Part (supply, pricing function, local optimization, etc.)

A further preferred embodiment of the inventive Grid Service-Broker with a reservation functionality is described in conjunction with Fig. 3 C now.

This application scenario shows a functionality of the Grid Service-Broker to handle service-reservation-requests which are separate from service-requests intended for direct processing. A service-reservation-request is an option on a specific amount of service-power in a given timeframe. Not to confuse with service-requests which have a timeline other than immediate processing. Also not to confuse with the reservation requests send by the Central Grid Service-Broker during the auction process (reservation-set) used to finalize the auction trade.

More or less the service-reservation-requests are handled similar to service-requests not carrying out the processing step. The scheduling of a corresponding service-request will be delayed or will never occur.

The major process flow of the Central-Service Broker component and the Distributed Broker component is shown in Fig. 3 C. The Central Service-Broker component receives service-reservation-requests from global Service-Users indicating an option to use a specific amount of service-power in a given timeframe for a given service-request. Due to the nature of a global market the service-users have a free choice for the selection of an appropriate Service-Provider.

These service-reservation-requests are service-power-reservation instruments like Call Options, Swings, Take-and-Pay etc. offered by the Grid Service-Provider. An external Bulletin Board allows Service-Users to query on the actual market prices for the different options provided by the Service-Provider. The Central Grid Service-Broker analyses the service-reservation-requests and maps them to a unique feasible-set for individual business product types (Bands). Based on the business product type an auction process is started periodically by the Central Grid Service-Broker to all Distributed Grid Service-Brokers counterparts belonging to a demand-set determined by the Central Grid Service-Broker. The Distributed Grid Service-Broker calculates its On-Demand-Value (ODV) for the processing of each product type (band) and provides an offer containing the ODV-price to the Central-Broker component. If there is no service-power available based on the actual reservation-scheme no offer will be provided.

The Central Grid Service-Broker evaluates the offers and builds a reservation-set using its Utility function (e.g. Best Price, supply-demand Matching function). Reservation-requests are sent to all the Distributed Grid Service-Brokers which are members of the reservation-set.

A service-user can then send a service-request taking the accepted service-reservation-request option. This needs to take place before the option is expired. The service-request will be scheduled at time of the option maturity.

In that specific embodiment the Central Grid Service-Broker and the Distributed Grid Service-Broker perform the same tasks as described in embodiment Fig. 3 B.

A further preferred embodiment of the inventive Grid Service-Broker with a novel Meta-Scheduler functionality is described in conjunction with Fig. 3 D/E now.

Manifested in all the above processes is a sophisticated novel feature implemented as part of the Grid Service-Broker. This is a meta-scheduling type of distribution mechanism using a Economic Optimization Model scheduling policy (EOML3) for the distribution of service-requests to Service-Provider Grid domains. This meta-scheduler works with the abstraction of computing resources to the level of service-power as a commodity measured in basic Service-Units. A Service-Provider can use commercial oriented quantifiable criteria's for the specification of his optimization strategy.

The Meta-Scheduler uses the concept of Bands (business product related capacity of service-power) to optimize the processing of different service-request types. The algorithm used to dynamically manage these bands is called Band Distribution Algorithm for Processing Domains (BDAfPD). Fig. 3 D shows the principles of BDAfPD and the major functional elements involved. The concept of Bands allows correlating service-requests directly with business products, business processes, etc. offered by a Service-Provider. The following advantage can be realized using the meta-scheduler with BDAfPD for the processing of service-requests compared to the traditional approaches:

Dynamic Band Management can be used to adapt the service-power (Band capacity) on-demand to the service-requests (Supply-Demand Equilibrium). The Service-Provider can save costs for spare capacity not needed. The free capacity can then be used for example to process non Grid related business,

Maximize the profit (throughput) for business products (service-requests) by simply increasing the bandwidth for these products in the Processing Domain. This can be based on periodically performed profit evaluations (recommendations) done by the Grid Service-Broker,

Bands showing a bad profit in relation to others can be decreased by their capacity or closed dynamically (this is also true on the processing domain or Service-Provider level). It allow to optimize the product and processing domain portfolio according to the market demand,

The dynamic utilization of the cost-function in relation to service-power needed for service-requests can be used to define a large bandwidth or one single band for service-requests. This allow to optimize processing on Processing Domain level having different cost/processing structures for service-requests,

Allows for a fast rejection of service-requests before accepting them, if the processing domains (Service-Provider) have not the capabilities to process (using filter and demand-set), instead of scheduling the service-request and paying business penalty if Service Level Agreements are violated or processing can not be executed.

Bands carry the attributes of the QoS committed by the Service-Provider to process specific service-requests types. This allows for the usage of band specific Resource Managers which are optimized in the processing of specific service-requests. This allows for an higher degree of QoS guarantee with less penalty payments and a higher utilization of service-requests providing a higher profit for the band.

The meta-scheduling service of the Grid Service-Broker in conjunction with the dynamic band management and BDAfPD algorithm (see Fig. 3 E) provides a general framework to allow for the optimization of the Service-Providers profit generated with the processing of service-requests. It allows for many types of multi-objective optimization algorithms based on individual plug-ins for dynamic band management, On-Demand-Value calculation, filter-functions, demand-sets and feasible-sets generation. The Grid Service-Broker dynamically collects hierarchical data about current profit, prices, capacity, performance Index, QoS, supply, demand, elapse-time and other statistical information for individual bands, processing domains and services-providers to support these algorithms.

A further preferred embodiment of the inventive Grid Service-Broker with the Abstraction and Transformation functionality is described now.

The abstraction of computing resources to the level of service-power is used by the Grid Service-Broker to deal with this commodity on a very granular base. The service-power provided by Grid processing domains is measured in elementary Service-Units, which are also the basic accounting units for service-power used on a processing domain.

To calculate the total service-power, basic resource units are used which could be for example CPU units, I/O units, main storage units, application units, OS units, Network units.

These basic resource units are multiplied by an individual weight reflecting their relevance to others (e.g. cost factor). If we calculate the service-power used to process a Service Request Work Unit SRWU t in a period timeframe of P on a processing domain PD x having n basic resources, it can be formulated as:

$$S_t^x = \vec{B}_t^x \times \vec{\delta}^x = \sum_{i=1}^{n} \sum_{j=1}^{P} B_{t^i_j}^{x} \cdot \delta^x \left[ SU \right]$$

To transform the service-power between different processing domains which have different processing performance, it can be defined the Service-Unit transformation factor to calculate neutral Service-Units for PD x as follows:

$$\gamma_{SU}^{x} = \frac{1}{PD^x_{coeff.}}$$

The transformation factor can be derived using a reference processing-domain and having the basic resource weights given for the processing domains.

Another practical approach for getting the transformation factor is to use a PD benchmark as follows:

$$PD^{x=ref}_{benchmark \ M} = \overline{\sum_{t=1}^{m} S_t^x} \leftrightarrow SRWU_t \ \forall \ (SRWU_t \in M)$$

which is calculated as the mean value of historical samples m needed to process benchmark M on reference PD M = unconstrained mix
resulting in a PD coefficient of

$$PD^x_{coeff} = \frac{PD^x_{benchmarkM}}{PD^{ref}_{benchmarkM}}$$

The initial estimation of the PD processing power is necessary, if a combination of heterogeneous PDs are given and the measurement of basic resource units is done using different methods. This means that the local resource managers (or work load managers) of the processing domains are using different methods to sample the basic resource units. In a homogenous environment this can be avoided by using a global sampling metering.

At least two different approaches can be used to calculate the neutral Service-Units required by the Grid Service-Broker, which are an initial benchmarking of the PDs using a reference PD to calculate the PD coefficient or using comparable performance data for the basic resource units of the PD to calculate the PD coefficient.

A further preferred embodiment of the inventive Grid Service-Broker with a reservation-scheme functionality is described in conjunction with Fig. 3 F/G/H now.

The Grid Service-Broker (Distributed Grid Service-Broker part) uses an advanced reservation scheme to plan the processing. The scheme allows for the planning of service-requests and service-reservation-requests. A basic reservation unit is called "reservation-slot" which represents a fixed or variable capacity of service-power in a single period of time (see Fig. 3 F and Fig.3 G) .

Using this reservation scheme the Distributed Grid Service-Broker optimizes the processing according to QoS-Parameter (e.g. Timeline, elapse-time, etc.) and profit optimization by smoothing the peek-load demands over periods of time. This is also based on historical time series analysis (e.g. Performance Index data, profit data) collected by the data collection service over time and evaluated by the data historical simulation service.

A further preferred embodiment of the inventive Grid Service-Broker with a Data Collection Service is described now. This is an additional component of the Distributed Grid Service-Broker which extends the basic components. It deals with compression and data sampling techniques aimed to reduce the amount of collected data resulting in pre-analyzed cleared time series.

A further preferred embodiment of the inventive Grid Service-Broker with Data Historical Simulation Service is described now.

This is an additional component of the Central Grid Service-Broker which extends the basic components. It provides enhanced data analysis techniques for historical data to support projection and risk analysis for the SRWU processing.

A further preferred embodiment of the Grid Service-Broker with a On Demand Value Function is described now.

The On-Demand-Value-Function (ODVF) which is used by the Distributed Grid Service-Broker determines the actual market-value or On-Demand-Value (ODV) for service-request processing. The function represents a multi-objective optimization scheme as shown in the attached table.

Individual elements (which are themselves functions) of the ODVF are the demand-, supply-, price- (revenue), cost- and penalty-function. The ODV is calculated during the auction process for service-requests on a given time horizon (timeline parameter). Depending on the calculated ODV, individual service-requests can be ranked and selected during the auction process (with an offer response) by the Distributed Grid Service-Broker (local profit optimization). The same mechanism takes place if service-power (capacity) is requested on an individual band level (capacity sealed bid auction process). In this case the ODV is calculated for band capacity on a given time horizon. It can be used for example to adjust the band settings (e.g. higher ODV leads to extend the band capacity if needed and vice versa).

$$\Gamma(SO_i^x) = M\left\{ \ SO_{B_i}^x, U(PD^x), SO_{R_i}^x, C(PD^x), \Omega(T_p) \ \right\}\Big|_{Period=P}$$

Demand

Supply

Revenue

Cost

Penalty

Time frame

An example of an ODVF with the function elements price P, costs K and Penalty can be formulated as follows:

$$\Gamma(SO_i^x) = \Xi^x - \Pi^x - \Omega^x$$
$$= P(SRWU_i)^x - K(SRWU_i)^x - \Omega(SRWU_i)^x$$

Please note that supply and demand is expressed using the Performance Index which calculates as:

$$PI^x = \frac{demand^x}{max.\,Supply} = \frac{\sum_i SPDB_i^x}{TSUP^x}$$

i = number of bands

The price or revenue function for SRWU i can be formulated based on an actual Performance Index PI of the processing domain x in a time interval [t,T]

$$P(SRWU_i)^x = \frac{PDCost}{TSUP^x}(1 + PI_t^x + \Delta\hat{P}I_T^x) \cdot PSUN_i^x (1 - discount \cdot discount\_correction)$$

...without reservation cos ts and $PI_{Spot}^x = PI_t^x$

Where the discount correction is a function of the PI, which could be as follows:

$$discount\_correction = 1 - \frac{1 - PI^x}{1 + PI^x}$$

The PI delta can be estimated using time series analysis on historical data and Forwards calculation (e.g. Mean reverting model); where the delta calculates as actual spot PI minus the mean value of Forward PI for interval T.

$$\Delta\hat{P}I_T^x = PI_S^x - \overline{F}(PI_T^x) = PI_S^x - \frac{1}{T}\sum_{i=0}^{T} F(PI_i^x)$$

Sample Period = N; $PI_0^x$ = timeseries start; T = n periods

An alternate approach could be to use the mean value of Forward Call Options calculation with financial instruments (e.g. using Black & Scholes).

$$\Delta\hat{P}I_T^x = \frac{\sum_{i=1}^{T} PI_{c\,i}^x}{T} = F_C(H(PI^x), T_P)$$

Sample Period = N; $PI_0^x$ = timeseries start; T = n periods

The cost function calculates using a linear approach according to the Projected Service Units needed (PSUN) for the processing of SRWU type i.

$$K(SRWU_i)^x = \frac{PDCost}{TSUP^x} \cdot PSUN_i^{\ x}$$

Penalty functions relates directy to the Quality of Service function and the probability of failure. The final penalty cost calculation is shown below.

$$\Omega^x = (1 - p(\Omega)) \cdot \xi_\Omega \quad p(\Omega) = f(PI^x) \quad \Omega(SRWU_i)^x = \Omega^x \cdot P(SRWU_i)^x$$

Where the probability of failure could be a simple continues function like

$$p(\Omega) = 1 - PI^{x\,2}$$

or a more complex one like

$$p(\Omega)_{n+1} = p(\Omega)_n + PI_x \cdot p(\Omega)_n \cdot (p(\Omega)_{Limit} - p(\Omega)_n)$$

$$p(\Omega)_1 = 1.0; p(\Omega)_{Limit} = L \prec p(\Omega)_1; \Delta PI = PI\_increment$$

If no continuous form can be derived, data from time series samples based on historical values can also be used.
There are much more possibilities to derive and express the ODVF. A micro economic approach using a tatonement process with excess functions has been validated by the authors but will not be shown here.
A further preferred embodiment of the inventive Grid Service-Broker with the Capacity Sealed-Bid Auction is described in conjunction with Fig. 3 I/J/K now.
The Grid Service-Broker uses a novel type of auction to optimize the communication between the Central Grid Service-Broker part and the Distributed Grid Service-Broker part. The auction mechanism has been called Capacity-Sealed-Bid Auction. The general picture of scheduling SRWUs to appropriate processing domains is shown in Fig. 3 I. This is a two step approach with an auction mechanism as a first step followed by the distribution of SRWUs as the second step.
Using a standard auction mechanism (e.g. Sealed-Bid) would lead to the execution of the two steps mentioned above for each SRWU arriving in the SRWU queue. This generates the protocol sequence of BID, BID-Rsp, Reservation, Reservation-Rsp etc. for each single SRWU (see Fig. 3 J for details on the protocol). Special care need to be taken in this approach to allow auction retries for SRWUs not served by PDs in the first auction run (otherwise leading to a high rejection rate of SRWUs, even PD service-power is available). For the standard auction case these involves all SRWUs which lost the auction to the winner-SRWUs not getting an offer from the PDs. This leads also to a low utilization of PDs due to bidding (congestion) for the same "attractive" SRWUs and having then spare capacity for the auction period if the auction is lost.
To reduce the communication overhead between the Central Grid Service-Broker and Distributed Grid Service-Broker and to get an acceptable profit for the PDs a sophisticated auction mechanism needs to be found. It must reduce the rejection rate of SRWUs if capacity is available, allow for auction retries and reduces spare capacity of PDs leading to a higher profit. The novel solution is called Capacity-Sealed-Bid Auction. The Central Grid Service-Broker clusters SRWUs for each scheduler period by their individual type. The capacity is calculated for the total service-power needed to process all SRWUs which maps to a specific band type (see BDAfPD). An auction process with the Distributed Grid Service-Brokers is started to get the required service-power (on band level). The Central Grid-Server Broker analyses the BID-Reponses (offers) from the Distributed Grid Service-Brokers and matches the offered capacity to the required capacity on SRWU level (e.g. using Best Price policy). SRWUs which could not been matched (no service-power available) are allowed to join the next auction run until a final retry is reached.

The inventive approach leads to an overall reduction of communication overhead between the two Broker parts by a factor of 7 compared to the standard solution. The profit of the PDs is increased for the same experiment by 50% more utilization. These experiments also show that a retry count of 1 is sufficient by our Capacity Sealed-Bid Auction to avoid starvation of single SRWUs compared to a retry count of more than 10 in the standard case.

A further preferred embodiment of the inventive Grid Service-Broker with a Service Brokerage is described now.

This is an additional component of the Central and Distributed Grid Service-Broker parts which extends the basic components of standard instruments. It provides enhanced functionality for service trading based on financial instruments tailored to trade computing service power. Instruments supported could be Forward and Option pricing e.g. Swing Options, Take-and-Pay Options, Capacity Options, etc., which need to be priced for a future processing, spanning 1 to n periods of elapse time, and having different requirements in QoS.

A further preferred embodiment of the inventive Grid Service-Broker with a Service-Request Processing (master-flow Controller) is described now.

This is an additional component of the Distributed Grid Service-Broker which extends the basic components. It provides a sophisticated mechanism for the scheduling and control of business process related applications based on a common business process description language. It extends the local resource managers function to the level of a business process controller by the master-flow controller component. This component is responsible to process, control and monitor a SRWU related business process.

The implementation of the present invention in a prior art Grid architecture is described now. At first the major components of the prior art Grid architecture "Globus" are briefly described and then the inventive extensions are described in order to implement the present invention into that prior art Grid architecture.

Major components of Globus are shown in Fig. 4 A.
The major Globus components are the Grid Resource Allocation Manager (GRAM) Client and Server. The communication between Client and Server takes place using the Globus Resource Specification Language Scripts (RSL). These scripts contain the job and their corresponding execution parameters. The Job Manager component of the GRAM-Server interfaces to the local resource managers to dispatch the jobs scheduled by the GRAM-Client. The GRAM-Client receives status information about the actual job execution and receives the final outputs via the Global Access to Secondary Storage (GASS) service. The Dynamically Updated Request Online Coallocator (DUROC) function of the GRAM-Clients (Fig. 4 B) allows for a distribution of incoming jobs to different GRAM-Servers.

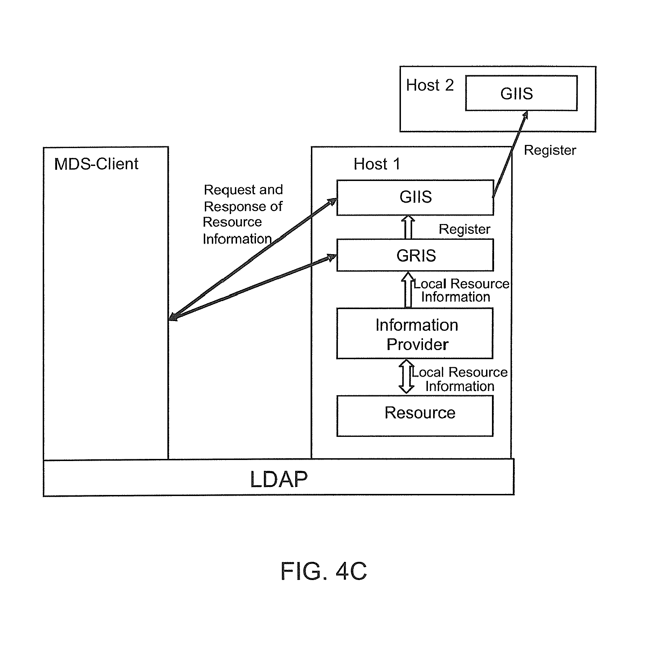

The Information Service of Globus is realized via the Monitoring and Discovery Service (MDS). It allows to manage static and dynamic information of Grid resources. This is shown in Fig. 4C.

Requests between MDS-Client and the information services components running at different hosts are using the Lightweight Directory Access Protocol (LDAP). The collection of information data is performed by several components running at the hosts. These are the GIIS (Grid Information Index Service) which maintains hierarchical references to the resource information and the GRIS (Grid Resource Information Service) which provides the resource information.

The inventive Grid Service-Broker extensions to the prior Art Grid architecture - Globus - are described now.

Figure 5 A shows the overall technical structure and communication flow of the present Grid Service-Broker solution. It is built of a Central Grid Service-Broker part with six major components and the corresponding Distributed Grid Service-Broker part with also six major components as described in conjunction with Fig. 2 C - 2 R.

All of the major Grid Service-Broker components are an extension to the prior art Grid implementation shown with Globus. Globus does not provide any Grid Service-Broker functionality. The Grid Service-Broker can use the Globus components as an infrastructure alternative mainly for the message service and the information service. An adaptation of the relevant Grid Service-Broker components to the Globus infrastructure components are shown below:

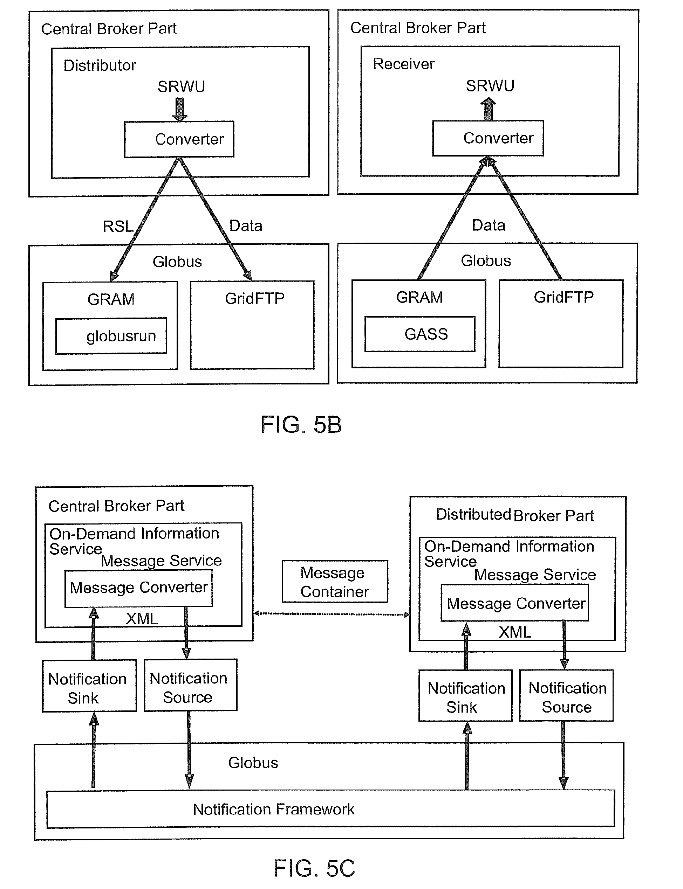

Figure 5 B shows how the Distributor and Receiver components (6) are add-ons to the Globus GRAM service described above to utilize it for the distribution of Service-requests. This can be done by using a converter type mechanism to adjust to the RSL scripts and the Globus data transfer.

The On-Demand Information Service components (4,1) of the Grid Service-Broker can use the Globus infrastructure to send and receive messages (SRWU message container) between the different Grid Service-Broker parts. This is shown in Fig. 5 C.

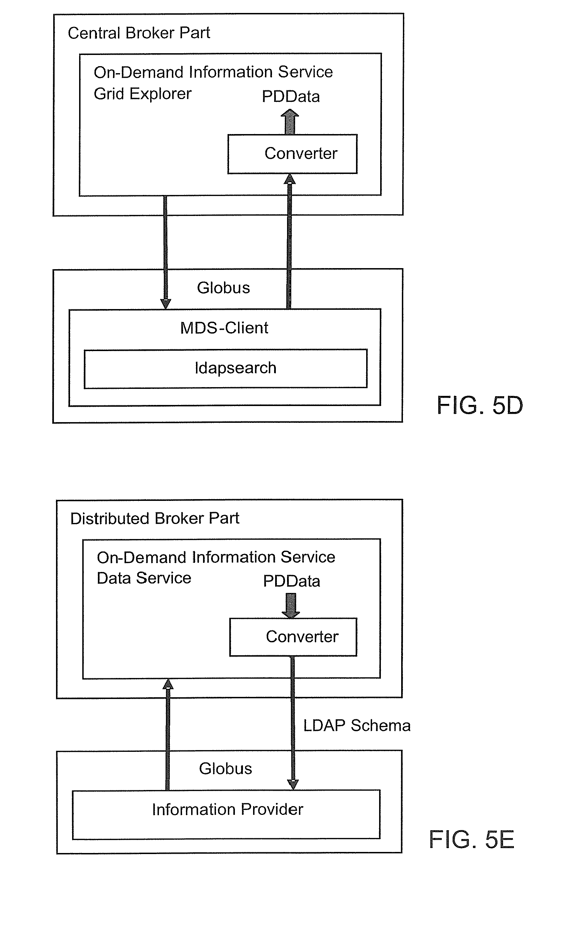

The Grid Explorer function of the central Grid Service-Brokers On-Demand Information Service component (4) is able to interface to the Globus MDS-Client to complement the global Bulletin Board information provided by the distributed Grid Service-Broker this is shown in Fig. 5 D.

Fig. 5 D shows the Grid Explorer of Central Grid Service-Broker part adapting to the Globus MDS-Client.

The data service function owned by the On-Demand Information Service component (1) of the Distributed Grid Service-Broker can use a converter utility to adapt to the LDAP schema and the Globus data information provider structures (see Fig. 5 E). This can be used to announce data collected by the Distributed Grid Service-Broker to the Globus data service.

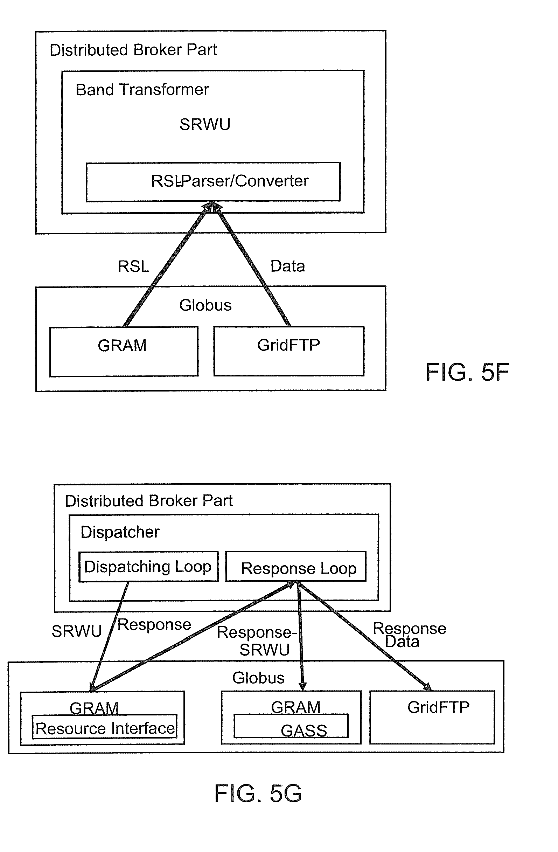

The Band Transformer component of the Distributed Grid Service-Broker part could be extended to use a RSL-Parser/Converter to receive Globus Job streams by the GRAM Server and convert them into the SRWU Format needed by the Band Transformer for using the BDAfPD. Grid-FTP could be interfaced by the Band Transformer to send/receive job data. This is shown in Fig. 5 F.

For the dispatching of SRWUs to local Resource- and Workload Managers the Dispatcher component of the Distributed Grid Service-Broker could use the different GRAM Service interfaces to start and control jobs and send/receive the job data.
This is shown with Fig. 5 G.

**Definition of terms used in the patent description**

**Service-Requestor:** Demands computing service-power from Service-Providers to be used for the processing of individual Service-Requests. The terms and conditions for the processing of the Service-Requests are negotiated with the Service-Broker which represents a Service-Provider-domain.

**Service-Provider:** Offers computing service-power to service-requestors. This can be based on a "local" or "global" market scenario, depending on the individual contracts used. The Service-Broker represents an individual Service-Provider by the definition of a Service-Provider-domain.

**Resource-centric:** The classic approach to allocate resources in computing systems.

**Service-centric:** A new approach used by the Service-Broker on using computing resources. The traditional resource-centric approach on using computing resources has been extended by the Service-Broker to a level of a service-centric trading of computing service-power measured in Service-Units.

**Service-power:** commodity which is traded by the Service-Broker. The projected-service-units-needed (PSUN) to process individual service-requests on processing-domains are used by the Service-Broker to determine the service-power to be traded. The computing service-power is measured in Service-Units.

**Service-Request:** abbreviated form of a service-power-request or a service-power-reservation-request forming a Service-Request-Work-Unit (SRWU). It represents an individual request of a service-requestor to perform or plan the processing. The service-request format is defined and used by the Service-Broker. Usually a service-request correlates to individual business products or business processes, which are supplied/supported by a Service-Provider. These are mapped to bands by the Service-Broker. Transformation of individual type of requests (e.g. Web-Services formats, customer specific formats, etc.) to the service-request format can be performed by a formatter-service.

**Service-Unit:** Basic measurement unit of the service-power. The Service-Units are defined and used by the Service-Broker in a way to be resource independent and to be general transformable in a distributed, heterogeneous computing environment. The trading of service-power between Service-Requestors and Service-Providers is performed by a Service-Broker component.

**Service-Provider-Domain:** Set of processing-domains which belong to a unique Service-Provider. It represents the total service-power supplied by a Service-Provider to be used by the Service-Broker for trading.

**Processing-Domain:** Cluster of computing power, which can be heterogeneous systems (e.g. Grids) or homogenous systems (e.g. High performance clusters like IBM z/OS Parallel Sysplex) or any combination of these forming a unique capacity of service-power available for trading by the Service-Broker. The characteristics (e.g. total service-power, band-types supported, QoS, etc.) of the processing-domain is filed in a processing-domain profile (PDP). The processing-domain represents an unique management-domain owned by the Distributed-Request-Broker part.

**Service-Broker:** Major component of the invention, which is located in a Service-Provider-Domain. It applies to a set of methods and functions to perform the trading of service-power for a Service-Provider. It is responsible for the trading of service-power between Service-Requestors and Service-Providers.

**Central Service-Broker:** major part of the Service-Broker, which is located in a Service-Provider-Domain. It applies to a set of methods and functions to perform the trading of service-power for the Service-Provider-Domain. In addition a set of methods and functions are used to allow for (global) profit optimization of a Service-Provider-Domain.

**Distributed Service-Broker:** major part of the Service-Broker, which manages a single processing-domain. It applies to a set of methods and functions to perform the trading of service-power for the processing-domain. In addition a set of methods and functions are used to allow for (local) profit optimization of a processing-domain.

**Multi-Objective-Optimization:** optimization to be performed having multiple objectives (dimensions). For example optimize the processing of service-requests having a given budget constrain, timeline, QoS and maximize profit for the Service-Provider.

**Band Distribution Algorithm for Processing Domains:** see BDAfPD.

**Service-Provider objectives:** Parameters used to express the criteria's from a Service-Provider for the processing of Service-Requests. This can be for example: Use the cheapest processing domain, Maximize throughput of standard business, Maximize the Utilization of a processing domain(s), Keep Quality of Service and Business Service Level Agreements, use On-Demand-Value for Service Request processing. These parameters are maintained in the provider-service-element (PSE) profile.

**Business Products:** These are products offered by a Service-Provider specified in business terms (e.g. travel booking, payment order processing, etc.). The products are defined with a fixed scope and quality. Usually business products are built on or supported by business processes to deliver the required functionality.

**Business Processes:** Are processes which support a specific type of business. There are several hierarchical levels of business processes. The level which supports a business product is called the master flow.

**Reservation-scheme:** Applied methods and functions of the Distributed Service-Broker part to handle the process of reservation for the planning of the traded service-power.

**Reservation-slot:** Basic reservation unit for service-power, which is a fixed or variable capacity of service-power in a single period of time. It is used by the Reservation scheme to plan service-requests for processing.

**On-demand-value:** Expresses the market-value of a service-request for an individual processing-domain. This takes into account the actual situation of the processing-domain (e.g. Performance Index, Costs, QoS, reservation, etc.) the operational risk for processing (QoS, Penalties, expected future demand, etc.) and the competitive market situation (mean-price, equilibrium price, price strategy, etc.).

**Performance Index:** Is a measure on how good a computing system, processing-domain, Service-Provider-domain is performing against a given target. The target(s) can be expressed in terms of utilization, response-time, QoS, velocity, etc. or any synthetic value which could be a combination of multiple values.

**Market-value:** Value measured in payment units which expresses the actual market price situation for a commodity.

**BDAfPD:** Band Distribution Algorithm for Processing Domains. A novel algorithm and set of methods introduced by the Service-Broker. It allows for a profit optimization of the Service-Provider-domains.

## Claims

1. A Service-Broker infrastructure in a heterogeneous distributed computing environment comprising a Service-Requester and a Service-Provider having a Service-Provider Domain with at least one processing domain, wherein said Service-Broker distributes service-requests received from the Service-Requester to said Service-Provider-Domain, wherein said Service-Broker infrastructure is
**characterized by**
a Central Service-Broker part and a Distributed Service-Broker part both belonging to said Service-Provider-Domain and being connected to each other via a communication infrastructure,
wherein said Central Service-Broker part and said Distributed Service-Broker part providing a service-centric approach,

wherein said service-centric approach provides service-power measured in Service-Units, wherein said Service-Units are defined and used by said Service-Broker in a way to be resource independent and to be general transformable in a distributed heterogeneous environment,

wherein said Central Service-Broker uses a Meta-Scheduling Service for distributing service-requests to the dedicated Distributed Service-Broker managing a single processing domain which is based on projected Service-Units needed to process the incoming service-requests, wherein said Meta-Scheduling-Service receives collected information from the Distributed Service-Broker, said collected information comprises information about the projected Service-Units needed to process the incoming requests and remaining service-power capacity on each of the Service-Provider processing domains,

wherein said distribution of said service-requests to the appropriate Distributed Service-Broker is performed by a Band Mapping component being part of said Central Service-Broker part mapping incoming service-requests to a specific Band, each Band represents specific business products with a certain amount of Service-Power measured in Service-Units with an agreed Quality of Service,

wherein each of said Band can be dynamically configured by a Band Transformer being part of the Distributed Service-Broker which sets the individual Band boundaries,

wherein the conjunction of the availability of service-power measured in Service-Units and the Band Mechanism allowing resource independent and transformable economic distribution of service requests within a heterogeneous distributed computing environment.

2. The Service-Broker infrastructure according to claim 1,
wherein said Meta-Scheduler uses an economic optimization model scheduling policy (EOML3 scheduling policy).

3. The Service-Broker to claim 1, wherein said Meta-Scheduler is supported by an auction process to establish a market-price for the provided service-power of the individual Bands.

4. The Service-Broker infrastructure according to 1, wherein said auction process is a Capacity-Sealed-Bid-Auction process.

5. The Service-Broker infrastructure according to claim 4,
wherein said Distributed Service-Broker uses an On-Demand-Value calculation to represent the processing domain specific market-value for processing of service-requests and to be used within said Capacity-Sealed-Bid-Auction process.

6. The Service-Broker infrastructure according to claim 1,
wherein said Distributed Service-Broker uses an advanced Reservation-scheme for reserving service-power either by a service-power-request or service-power-reservation-request.

7. The Service-Broker infrastructure according to claim 6,
wherein said advanced Reservation scheme uses reservation slots which is fixed or variable capacity of service-power in a single period of time.

8. The Service-Broker infrastructure according to 1, wherein said heterogeneous environment is a Grid-Environment.

9. The Service-Broker according to claim 1, wherein each Band is **characterized by** service-power provided, quality of service, price and cost structure, dedicated Resource Manager, and business processes and business products supported.

10. The Service-Broker according to claim 1, wherein said Central Service-Broker and said Distributed Service-Broker running within a Service-Provider-Domain.

11. The Service-Broker according to claim 1, wherein said communication between said Central-Service Broker and Distributed Service-Broker can be a Grid-infrastructure, TCP/IP infrastructure using hyper sockets.

12. A method for providing computing service power in a distributed heterogeneous environment, wherein said distributed heterogeneous computing environment comprising a Service-Requestor and Service-Provider connected via a Service-Broker infrastructure, wherein said Service-Broker distributes requests received from the Service-Requester to the Service-Provider having at least one processing domain,
wherein said method comprising the steps of:

receiving service requests from said Service-Requestor,

mapping said service requests to multiple Bands provided by the Service-Broker,

projecting Service Units to be processed for said service request on said mapped Band,

building a "demand set" of processing domains which have the needed Band for the needed service power available,

requesting offers from said processing domain being part of the "demand set",

building "a proposal set" out of the received processing domain offers which best fits the scheduling strategy, and

accepting the "proposal set "resulting in a reservation of service-power for the accepted service-request.

**13.** Method according claim 12, wherein said mapping step can be based on quality of service-power needed, business products and business process used.

**14.** Method according to claim 12, wherein said projecting Service Units collected provided the data collection service over time can be based on historical time series analysis.

**15.** Method according to claim 12, wherein said "demand set" is based on filter criterias of the Service Provider strategy for scheduling of said service requests.

**16.** Method according to claim 15, wherein said filter criteria are "use the cheapest processing domain", "maximize throughput of standard business (specific band type)", "maximize the utilization of the processing domain", "keep quality of service and business service-level agreements", On demand value for service-request processing.

**17.** Method according to claim 12, wherein said step for requesting offers can be carried out by a Capacity-Sealed-Bit-Auction-process.

**18.** Method according to claim 12, wherein said "proposal set" is based on best price strategy, lowest performance index, highest On Demand Value which are part of the Service-Provider scheduling strategy.

**19.** Method according to claim 12, wherein said accepting step is performed by a Reservation scheme which is able to optimize the processing according to quality of service-parameter, utilization, and profit optimization targets by smoothing the peek-load demands over time.

**20.** Computer program product stored in the internal memory of a digital computer, containing parts of software code to execute the method in accordance with claim 12 - 19 if the product is run on the computer.

FIG. 1A

FIG. 1B

FIG. 2A

FIG. 2B

FIG. 2C

FIG. 2D

FIG. 2E

FIG. 2F

FIG. 2G

FIG. 2H

FIG. 2I

EP 1 693 763 A1

FIG. 2J

26

FIG. 2K

Distributed Broker Part

On-Demand Information Service (1)

Auction Unit (3)

Bulletin Board (5)

Band Transformer (6)

Dispatcher (4)

Data Collection Unit (2)

Central Broker Part

MFC/WLM

**Auction Unit**

Reservation- Loop

Bid- Loop

On- Demand Information Service

Band Transformer

Bulletin Board

FIG. 2L

FIG. 2M

FIG. 2N

Distributed Broker Part

On- Demand Information Service (1)

Auction Unit (2)

Bulletin Board (3)

Data Collection Unit (4)

Band Transformer (5)

Dispatcher (6)

Central Broker Part

MFC/WLM

**Band Transformer**

Band Filter

Band Optimizer

SRWU- Input Queue

Auction Unit

Bulletin Board

Central Broker Part

FIG. 2O

Distributed Broker Part

On- Demand Information Service (1)

Auction Unit (2)

Bulletin Board (3)

Data Collection Unit (4)

Band Transfomer (5)

Dispatcher (6)

Central Broker Part

MFC/WLM

Dispatcher

Response Loop

Dispatching Loop

Central Broker Part

MFC/ WLM

Bulletin Board

FIG. 2P

FIG. 2R

- Closed User Group Service-Users sending Service Requests distributed over time
- Service-User don't have choice to select other Service-Providers (OTC contract)
- QoS committed via contract (SLAs for standardized products)

FIG. 3A

- Global Service-Users sending Service Requests distributed over time
- Service-User have a free choice to select Service-Providers
- QoS can be committed via contract (SLA for standard products, OTC products)

FIG. 3B

- Global Service-Users sending Service-Reservation-Requests distributed over time
- Service-User have a free choice to select Service-Providers
- Instruments can be used for reservation (Call Options, SWING Options, Take-and-Play Options, etc.)

**FIG. 3C**

QoS = Quality of Service Profile
SRWU = Service Request Work Unit
PDP = local PD Profile
PSUN = Projected Service Units Needed

**FIG. 3D**

```
  ┌─────────────────────────────┐
  │  Start scheduling loop      ⟩─────── For every period
  └─────────────────────────────┘

        ┌──────────────────────┐          Get Service Request Work
        │  Get SRWUs to be     ⟧───────── Units (SRWUs) to be
        │  scheduled.          │          scheduled.
        └──────────────────────┘

        ┌──────────────────────┐          Find product band by
        │  Map to product band │───────── mapping of the Service
        └──────────────────────┘          Request Unit type to a
                                          specific band.

        ┌──────────────────────┐          This is done using
        │  Project the Service │          accumulated history data
        │  Units needed to     │───────── based on SRWU Type
        │  process the SRWUs.  │          (PSUN)
        └──────────────────────┘

        ┌──────────────────────┐          based on SRWU type,
        │  Build feasible-set  │───────── PSUN and filter criteria's
        │  for SRWUs           │          used.
        └──────────────────────┘

        ┌──────────────────────┐          whichfulfills the SRWU
        │  Build demand-set of │          requirements (CSE) within
        │  Processing Domains  │───────── their Processing Domain
        └──────────────────────┘          Profile (PDP).

  ┌───────────────┐  yes   ╱─────────────╲          If none could be found the
  │ reject SRWUs or│◀──────⟨  demand-set  ⟩───────── service request is either
  │ route to Mediator│     ╲   empty?     ╱          rejected or routed to the Grid
  └───────────────┘        ╲─────────────╱           Service-Broker mediator.
                                │ no

        ┌──────────────────────┐          e.g. Capacity Sealed-Bid Auction
next    │ Get offers for       │          Process is started for the
Period  │ demand-set e.g. via  │───────── remaining service capacity in the
        │ Auction Process      │          product bands used to process
        └──────────────────────┘          the SRWUs (feasible set).

        ┌──────────────────────┐          (e.g. best Price, the lowest
        │  Build proposal-set  │          Performance Index, etc.) is used
        │ finding PD offers    │───────── to schedule the SRWUs.
        │ which best fits the  │
        │ scheduling strategy  │
        └──────────────────────┘

  ┌───────────────┐  yes   ╱─────────────╲
  │ reject SRWUs or│◀──────⟨ proposal-set ⟩───────── no capacity available
  │ route to Mediator│     ╲   empty?     ╱
  └───────────────┘        ╲─────────────╱
                                │ no

        ┌──────────────────────┐          offersneed to be planed using
        │ Accept proposal-set  │───────── reservation scheme
        │ thru Reservation     │
        └──────────────────────┘
```

## FIG. 3E

**FIG. 3F**

**FIG. 3G**

| Slot properties | Queue Anchors work lists | Service allocation map | Slot Status Info |
|---|---|---|---|

Period Id

: *unique Period number1..N for projection interval*

Band Id

: *unique Band Number*

Importance

: *high*
: *medium*
: *low*

Slot Type

: *reserved (scheduled work)*
: *Occupied (ready; run work)*
: *Free*

Scheduler work list anchor

: *Pending SRWUs to bedispatched*

Basic Units $B_i{}^x$

: *Basic Units by Slot*

Service Units

: *Service Used by Slot*
: *Service unused*

Running

: *Processor*
: *Channel*

Waiting

: *Input / Output resource*
: *Processor*
: *Channel*
: *Dispatcher*

FIG. 3H

**FIG. 3I**

**FIG. 3J**

FIG. 3K

Resource          Data              Information
Management        Management        Service

Grid Security Infrastructure

GRAM -Client

globusrun

GSI-Client

Job Request
RSL

GASS

Callback

Status

Cancel

File
Transfer

Output
Transfer

GRAM -Server

Gatekeeper

GSI-Server

Job Manager

RSL-Parser

GASS

Resource
Manager

FIG. 4A

GRAM-Client

globusrun

RSL
DUROC

DUROC
Parser

Job Request
RSL

GRAM-Server 2

GRAM-Server 1

FIG. 4B

FIG. 4C

FIG. 5A

FIG. 5B

FIG. 5C

FIG. 5D

FIG. 5E

Distributed Broker Part

Band Transformer

SRWU

RSL-Parser/Converter

RSL   Data

Globus

GRAM   GridFTP

FIG. 5F

Distributed Broker Part

Dispatcher

Dispatching Loop   Response Loop

SRWU   Response   Response-SRWU   Response Data

Globus

GRAM
Resource Interface

GRAM
GASS

GridFTP

FIG. 5G

**European Patent Office**

# EUROPEAN SEARCH REPORT

Application Number

EP 06 10 1512

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JIN X ET AL: "Characterizing autonomic task distribution and handling in grids" ENGINEERING APPLICATIONS OF ARTIFICIAL INTELLIGENCE, PINERIDGE PRESS, SWANSEA, GB, vol. 17, no. 7, October 2004 (2004-10), pages 809-823, XP004653772 ISSN: 0952-1976 * abstract * * page 810, paragraphs 2-5,8 - page 811, paragraphs 1,2 * ----- | 1-20 | INV. G06Q30/00 ADD. G06F9/46 |
| X | US 6 516 350 B1 (LUMELSKY LEON L ET AL) 4 February 2003 (2003-02-04) * abstract * * column 5, lines 26-35,49-55 - column 6, lines 2-12,45-65 * * column 8, lines 65-67 - column 9, lines 1-14,39-50 * * column 10, lines 45-67 - column 11, lines 1-29 * ----- | 1-20 | |
| X | FOSTER I ET AL: "The Physiology of the Grid: An Open Grid Services Architecture for Dis" GLOBUS PUBLICATIONS RESEARCH PAPERS, 22 June 2002 (2002-06-22), pages 1-31, XP002308622 * page 6, paragraph 3 - page 7, paragraph 1 * * page 10, paragraphs 2,7 - page 11, paragraph 6 * * page 12, paragraph 2 - page 15, paragraph 5 * * page 16, paragraph 1 - page 20, paragraph 2 * ----- -/-- | 1-20 | TECHNICAL FIELDS SEARCHED (IPC) G06Q |

The present search report has been drawn up for all claims

| Place of search | Date of completion of the search | Examiner |
|---|---|---|
| The Hague | 4 July 2006 | Thiam, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 693 763 A1**

European Patent
Office

**EUROPEAN SEARCH REPORT**

Application Number

EP 06 10 1512

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/139144 A1 (BATRA VIRINDER M ET AL) 15 July 2004 (2004-07-15)<br>* abstract *<br>* page 2, paragraphs 14,16-18,21,23 *<br>----- | 1-20 | |
| A | CAO J ET AL: "A dynamically reconfigurable system based on workflow and service agents"<br>ENGINEERING APPLICATIONS OF ARTIFICIAL INTELLIGENCE, PINERIDGE PRESS, SWANSEA, GB,<br>vol. 17, no. 7, October 2004 (2004-10), pages 771-782, XP004653769<br>ISSN: 0952-1976<br>* abstract *<br>* page 772, column 1, paragraphs 1,4 - column 2, paragraph 4 *<br>* page 773, paragraph 1 *<br>----- | 1-20 | |
| | | | **TECHNICAL FIELDS SEARCHED** (IPC) |

The present search report has been drawn up for all claims

| Place of search | Date of completion of the search | Examiner |
|---|---|---|
| The Hague | 4 July 2006 | Thiam, M |

EPO FORM 1503 03.82 (P04C01)

## ANNEX TO THE EUROPEAN SEARCH REPORT
## ON EUROPEAN PATENT APPLICATION NO.                EP 06 10 1512

This annex lists the patent family members relating to the patent documents cited in the above-mentioned European search report.
The members are as contained in the European Patent Office EDP file on
The European Patent Office is in no way liable for these particulars which are merely given for the purpose of information.

04-07-2006

| Patent document cited in search report | Publication date | Patent family member(s) | | Publication date |
|---|---|---|---|---|
| US 6516350 B1 | 04-02-2003 | NONE | | |
| US 2004139144 A1 | 15-07-2004 | AU | 2003295131 A1 | 22-07-2004 |
| | | BR | 0317836 A | 29-11-2005 |
| | | CA | 2508081 A1 | 15-07-2004 |
| | | EP | 1584030 A2 | 12-10-2005 |
| | | WO | 2004059480 A2 | 15-07-2004 |

EPO FORM P0459